# EUROPÄISCHE PATENTSCHRIFT

(11) **EP 1 332 919 B1**
(45) Veröffentlichungstag und Bekanntmachung des Hinweises auf die Patenterteilung: **31.10.2007**
(21) Anmeldenummer: 03001418.7
(22) Anmeldetag: 22.01.2003
(51) Int. Cl.: B60R 7/00, B60R 7/02

(54) **Aufnahmevorrichtung für einen Laderaum eines Kraftfahrzeugs**
Holding appliance for a loading space of a motor vehicle
Dispositif de maintien pour un espace de chargement de véhicule

(30) Priorität: 31.01.2002 US 353704 P
(43) Veröffentlichungstag der Anmeldung: 06.08.2003
(73) Patentinhaber: BOS GmbH & Co. KG, 73760 Ostfildern (DE)
(72) Erfinder: Lobanoff, Mark, Troy, Michigan 48098 (US)
(74) Vertreter: Patentanwälte Ruff, Wilhelm, Beier, Dauster & Partner

(56) Entgegenhaltungen:
- EP-A- 0 459 202
- DE-U- 7 303 614
- GB-A- 2 303 618
- US-A- 3 986 656
- US-A- 5 520 316
- US-A- 5 713 502
- US-B1- 6 183 177
- PATENT ABSTRACTS OF JAPAN vol. 2000, no. 02, 29. Februar 2000 (2000-02-29) & JP 11 314549 A (NISSAN MOTOR CO LTD), 16. November 1999 (1999-11-16)

## Beschreibung

Die Erfindung betrifft eine Aufnahmevorrichtung für einen seitlich durch Seitenwandungen begrenzten Laderaum eines Kraftfahrzeugs mit wenigstens einer zumindest abschnittsweise flexiblen Aufnahmetasche, die laderaumfest fixierbar ist, wobei zwei gegenüberliegende Seiten der Aufnahmetasche jeweils einen formstabilen, sich über wenigstens die Länge der zugeordneten Seite erstreckenden Stützabschnitt aufweisen, wobei die Stützabschnitte mit ihren gegenüberliegenden Stirnbereichen in einer laderaumseitigen Halterung lösbar fixierbar sind, und wobei die formstabilen Stützabschnitte durch ein sich wenigstens in einem Bodenbereich der Aufnahmetasche erstreckendes, flexibles Faltgebilde miteinander verbunden sind.

Aus der gattungsbildenden JP-A 11314549 ist ein Kraftfahrzeug mit einem Laderaum und einer den Laderaum nach vorne begrenzenden Fondsitzbank bekannt, wobei die Fondsitzbank in Fahrzeuglängsrichtung verschiebbar angeordnet ist. Im Laderaum selbst können Zusatzsitze vorgesehen sein. Zwischen der Fondsitzbank und den Zusatzsitzen des Laderaumes ist eine Falttasche vorgesehen, die bei nach vorne geschobener Fondsitzbank aufgefaltet wird und so zur Aufnahme von Gegenständen dienen kann.

Die DE-U 7 303 614 offenbart ein Gepäcknetz für einen Kofferraum, das im Bereich eines oberen Randes des Kofferraumes aufspannbar ist. Das Gepäcknetz weist mehrere, unterschiedlich tiefe Netztaschen auf.

Eine weitere Aufnahmevorrichtung ist in Form eines Aufbewahrungsnetzes aus der Mercedes-Benz S-Klasse bekannt. In einem Kofferraum des Personenkraftwagens sind im Bereich eines Heckspiegels innenseitig mehrere Halterungen für das Aufbewahrungsnetz versehen, so dass das Aufbewahrungsnetz im Inneren des Kofferraumes an dem Heckspiegel aufspannbar ist. Das Aufbewahrungsnetz weist elastische Schlaufen auf, mittels deren es an den Halterungen fixiert ist. Die Halterungen sind als im Bereich des Heckspiegels innenseitig im Kofferaum fest montierte Befestigungsknöpfe gestaltet. Das Aufbewahrungsnetz kann bei Nichtbedarf entfernt werden.

Aufgabe der Erfindung ist es, eine Aufnahmevorrichtung der eingangs genannten Art zu schaffen, die einen variablen Einsatz ermöglicht.

Diese Aufgabe wird dadurch gelöst, dass die Halterung zwei im Bereich der Seitenwandungen des Laderaumes angeordnete Halterungsbereiche aufweist, die die wenigstens eine Aufnahmetasche auf gegenüberliegenden Seiten flankieren, wobei jeder Halterungsbereich mit einer im Laderaum zumindest abschnittsweise parallel zu einem Laderaumboden ausgerichteten Längsführung versehen ist, und wobei die gegenüberliegenden Stirnbereiche des Stützabschnittes der Aufnahmetasche als jeweils seitlich nach außen abragende Halteköpfe gestaltet sind. Die formstabilen Stützabschnitte sind insbesondere als Längsprofile gestaltet. Es ist jedoch auch möglich, diese Stützabschnitte als flächige Seitenwände zu gestalten. Vorteilhaft wird eine stabile Aufnahme zu transportierender Güter gewährleistet. Durch die Fixierung in der laderaumseitigen Halterung ist die Aufnahmetasche stabil gehalten im Gegensatz zum Stand der Technik, bei dem durch die elastisch nachgiebigen Halteschlaufen und das elastisch nachgiebige Netz schwerere Transportgegenstände das Netz nach unten ziehen und auf dem Laderaumboden aufstehen. Die erfindungsgemäße Aufnahmetasche weist eine ausreichende Eigensteifigkeit auf, die eine stabile Lagerung an der Halterung ermöglichen, ohne dass zusätzlich eine Abstützung im Bereich des Laderaumbodens erforderlich ist. Die Aufnahmetasche kann somit auch in Abstand oberhalb des Laderaumbodens enden, so dass der Laderaum unterhalb der Aufnahmetaschen zusätzlich beladen werden könnte. Aufgrund der Formstabilität ist auch ein vereinfachtes Einsetzen oder Lösen relativ zur Halterung ermöglicht. Durch die Faltbarkeit der Aufnahmetasche kann die Aufnahmetasche in eine kompakte Ruheposition zusammengelegt werden. Vorzugsweise ist die Halterung derart ausgelegt, dass wenigstens zwei parallel angeordnete Aufnahmetaschen fixiert werden können. Dadurch können unterschiedlich gestaltete Güter in unterschiedlichen Aufnahmetaschen angeordnet werden. Durch die erfindungsgemäße Lösung wird eine besonders einfache Fixier- oder Lösbarkeit der wenigstens einen Aufnahmetasche an der laderaumseitigen Halterung erreicht. In weiterer Ausgestaltung der Erfindung sind mehrere Halteköpfe auf jeder Seite mittels einer Gruppierungseinheit trennbar zusammengefasst, die jeweils lösbar mit der Halterung verbindbar ist. Die Halterung ist vorzugsweise in zwei einander gegenüberliegende Halterungsbereiche aufgeteilt, die die wenigstes eine Aufnahmetasche auf gegenüberliegenden Seiten flankieren. Vorteilhaft kann eine Gruppe aus wenigstens zwei Aufnahmetaschen gemeinsam mit der Halterung verbunden oder aus dieser entnommen werden. Zudem ist innerhalb des Laderaumes eines variable Positionierung der wenigstens einen Aufnahmetasche ermöglicht. Jeder offene Teilabschnitt ist vorzugsweise durch ein Deckelement verschließbar, so dass sich durchgängig fluchtende Längsführungen ergeben.

In Ausgestaltung der Erfindung stehen die beiden Aufnahmetaschen mittels eines gemeinsamen Stützabschnittes miteinander in Verbindung. Hierdurch wird ein Aufnahmetaschenpaar gebildet, das durch die Verwendung eines gemeinsamen Stützabschnittes einen reduzierten Materialaufwand benötigt. Bei Verwendung eines gemeinsamen Stützabschnittes kann das Aufnahmetaschenpaar nicht in zwei voneinander unabhängige Aufnahmetaschen getrennt werden.

In weiterer Ausgestaltung der Erfindung sind die Stützabschnitte und das Faltgebilde in ihrer Funktionsposition derart angeordnet, dass die Aufnahmetasche symmetrisch zu ihrer Mittellängsachse auf- oder zufaltbar ist. Falls die Stützabschnitte daher auf gleicher Höhe parallel zueinander ausgerichtet sind, so dass sich eine horizontale Öffnung der Aufnahmetasche ergibt, so ist die Aufnahmetasche symmetrisch zu einer Vertikalebene auf- oder zufaltbar.

In weiterer Ausgestaltung der Erfindung sind Mittel zum zwangsläufigen Auf- oder Zufalten der Aufnahmetasche vorgesehen. Hierdurch ist je nach Anforderung die Aufnahmetasche in ihrer unbelasteten Position aufgefaltet und damit zugänglich oder zugefaltet und damit kompakt zusammengelegt. Vorteilhaft wird die Aufnahmetasche für eine Benutzung automatisch und damit zwangsläufig aufgefaltet, da die Aufnahmetasche dann bereits für die Befüllung bereitsteht, ohne dass von Hand die Seitenabschnitte der Aufnahmetasche auseinandergedrückt werden müssen.

In weiterer Ausgestaltung der Erfindung greifen als Mittel zum zwangsläufigen Auf- oder Zufalten elastische Zug- oder Druckelemente im Bereich der Stützabschnitte an. Dies ist eine besonders einfache und funktionssichere Ausgestaltung.

In weiterer Ausgestaltung der Erfindung sind die elastischen Zug- oder Druckelemente in Hohlprofilen, insbesondere im Bereich der Stützabschnitte, zumindest teilweise integriert. Dadurch sind die elastischen Zug- oder Druckelemente platzsparend und vor Beschädidung oder Verschleiß geschützt untergebracht.

In weiterer Ausgestaltung der Erfindung sind Fixiermittel zum Sichern der Aufnahmetasche in einem kompakten Ruhezustand vorgesehen. Die Fixiermittel ermöglichen insbesondere ein Verschnüren der Aufnahmetasche in der zusammengefaltenen oder in anderer Art und Weise kompakt zusammengelegten Position. Dadurch ist eine platzsparende Verstauung der Aufnahmetasche möglich.

In weiterer Ausgestaltung der Erfindung verläuft das Faltgebilde als bahnförmige Falte zwischen zwei als Stützabschnitt dienenden Stützprofilen. Bei dieser Ausführungsform hängt die Falte zwischen den Stützprofilen durch und bildet eine entsprechend faltenförmige Aufnahme. Im Bereich der gegenüberliegenden Stirnränder der Falte ist die Aufnahmetasche offen. Hier können zusätzlich separate Verschlussmittel vorgesehen sein, die die gegenüberliegenden Stirnränder der Falte zusammenfalten.

In weiterer Ausgestaltung der Erfindung ist das Faltgebilde an gegenüberliegenden Stirnrandbereichen mit Seitenfaltabschnitten versehen, die Stirnseitenwände für die Aufnahmetasche darstellen. Dadurch ergeben sich für die Aufnahmetasche umlaufend geschlossene Begrenzungswände, so dass ein seitliches Herausfallen von Gegenständen verhindert wird. Die Faltbarkeit der Seitenfaltabschnitte gewährleistet, dass die Aufnahmetasche kompakt zusammenfaltbar, insbesondere symmetrisch zu ihrer Mittellängsebene, bleibt.

In weiterer Ausgestaltung der Erfindung ist für einen Bodenbereich des Faltgebildes wenigstens ein zumindest weitgehend formstabiler, insbesondere geteilter Einlegeboden vorgesehen. Dieser Einlegeboden, der je nach Bedarf eingelegt oder entfernt werden kann, versteift den Bodenbereich des Faltgebildes zusätzlich. Durch die Teilung ist zum einen auch weiterhin eine Faltbarkeit der Aufnahmetasche gegeben. Zum anderfen ist es möglich, die Breite des Einlegebodens zu variieren, indem die Einlegebodenteile einander entweder teilweise überlappen oder aber stumpf aneinanderstossen.

In weiterer Ausgestaltung der Erfindung ist jede Gruppierungseinheit mit einem Führungsabschnitt versehen, der im eingesetzten Zustand der Gruppierungseinheit mit der korrespondierenden Längsführung fluchtet. Dadurch ist es möglich, eine oder mehrere Halteköpfe innerhalb der Gruppierungseinheit längs des Führungsabschnittes zu bewegen und zudem übergangslos in der entsprechenden Längsführung zu verfahren.

In weiterer Ausgestaltung der Erfindung ist ein Gehäuse zur Aufnahme wenigstens eines flexiblen Flächengebildes vorgesehen, das sich quer zu den Längsführungen erstreckt und im Bereich gegenüberliegender Stirnseiten mit Halteköpfen versehen ist, die in den Längsführungen verschiebbar angeordnet sind. Als Gehäuse ist vorzugsweise ein Kassettengehäuse für die Aufnahme einer etwa horizontal ausziehbaren Laderaumabdeckung und/oder für die Aufnahme eines etwa vertikal ausziehbaren Trennnetzes vorgesehen. Sowohl die Laderaumabdeckung als auch das Trennnetz stellen flexible Flächengebilde dar. Die Längsführungen dienen somit zum einen zur Halterung der Aufnahmetaschen als auch zur Positionierung oder Verschiebung des Gehäuses. Zusätzliche, laderaumseitige Halterungen für das Gehäuse sind daher nicht notwendig.

In weiterer Ausgestaltung der Erfindung weist das Gehäuse eine Arretierungseinrichtung auf, die das Gehäuse in den Längsführungen lösbar blockiert. Dadurch ist es möglich das Gehäuse crashsicher im Fahrzeug zu verankern und dennoch bei Bedarf eine Entnahme oder ein Verschieben des Gehäuses zuzulassen.

In weiterer Ausgestaltung der Erfindung ist die Längsführung in Verlängerung des Halterungsbereiches ausziehbar gestaltet. Vorzugweise sind die Längsführungen der gegenüberliegenden Halterungsbereiche über eine Hecköffnung eines Kraftfahrzeugs nach hinten ausziehbar, wodurch eine vereinfachte Be- oder Entladung der wenigstens einen Aufnahmetasche ermöglicht ist.

In weiterer Ausgestaltung der Erfindung sind Blockiermittel zum Arretieren der Längsführung und/oder der Gruppierungseinheit vorgesehen. Dadurch ist gewährleistet, dass die wenigstens eine Aufnahmetasche auch bei einem Fahrzeugaufprall in ihrer Position innerhalb des Laderaumes verbleibt.

In weiterer Ausgestaltung der Erfindung sind Antriebsmittel zur Verlagerung der Halteköpfe oder der Gruppierungseinheiten innerhalb der Längsführungen vorgesehen. Dadurch ist es möglich, die Aufnahmetasche automatisch in geeignete Positionen zu verlagern, wodurch der Bedienkomfort insbesondere für Be- und Entladung erhöht wird.

In weiterer Ausgestaltung der Erfindung sind die Längsführungen in einem vorderen und/oder einem hinteren Endbereich zu dem Laderaumboden hin nach unten geführt. Dies ermöglicht bei Nichtbedarf ein Ablegen der Stützabschnitte und damit der Aufnahmetaschen in kompakter Anordnung im Bereich des Laderaumbodens. Ein Entfernen der Aufnahmetaschen bei Nichtbedarf kann hierdurch vermieden werden. Insbesondere vorteilhaft ist diese Ausgestaltung bei einem Laderaum für einen Personenkraftwagen mit einem starren Heckspiegel. Hier ist es möglich, die Aufnahmetasche mittels der im Bereich des Heckspiegels nach unten geführten Längsführungen im Bereich des Laderaumbodens abzulegen, ohne dass die Be- und Entladeöffnung des Laderaumes bei geöffnetem Heckdeckel beeintächtigt würde.

In weiterer Ausgestaltung der Erfindung stehen die Halteköpfe mit Hilfe von Adaptermitteln lösbar mit den Halterungsbereichen, den Längsführungen oder den Gruppierungseinheiten in Verbindung. Die Adapter können insbesondere als Befestigungselemente gestaltet sein, die eine verbesserte Fixierung an den Halterungsbereichen ermöglichen. Die Adaptermittel können von den Halteköpfen der Stützabschnitte entfernbar oder auch fest angeordnet gestaltet sein.

In weiterer Ausgestaltung sind benachbarte Adaptermittel durch formschlüssig wirksame Rastmittel lösbar aneinanderfügbar. Dadurch können zum einen mehrere Aufnahmetaschen zu einer Einheit miteinander verbunden werden. Zum anderen können gegenüberliegende Stützabschnitte einer einzelnen Aufnahmetasche zusammengefügt werden, wodurch die entsprechende Aufnahmeöffnung der Aufnahmetasche verschlossen ist.

In weiterer Ausgestaltung der Erfindung sind die Rastmittel einstückig an den Adaptermitteln angeformt. Bei dieser Ausführungsform sind die Adaptermittel vorzugweise im Kunststoffspritzgussverfahren hergestellt. Dies ermöglicht eine kostengünstige Herstellung in hohen Stückzahlen.

In weiterer Ausgestaltung der Erfindung ist die Halterung innerhalb des Laderaumes zwischen einer insbesondere in einem Laderaumboden oder in einer Wandbegrenzung versenkten Ruheposition und einer Funktionsposition beweglich gelagert. Bei dieser Ausführungsform kann die gesamte Halterung bei Nichtbedarf im Laderaumboden, in einer Seitenwand, in einer Verkleidung eines beweglichen Heckteiles oder in einer Rückenlehne in einer Fondsitzbank oder einem ähnlichen Wandbegrenzungsteil versenkt werden. Vorzugsweise sind Führungsmittel vorgesehen, die die Halterung aus dieser Ruheposition zwangsläufig in die Funktionsposition geleiten. Entsprechende Führungsmittel können Führungsschienen in gegenüberliegenden Seitenwänden des Laderaumes sein. Geeignete Führungsmittel sind auch teleskopförmige Stangen oder ähnlich gestaltete Linearführungsmittel, die die Halterung aus einer im Laderaumboden versenkten Position in eine Funktionsposition nach oben bewegen. Anstelle der Versenkung der Halterung in dem Laderaumboden oder in einer Wandbegrenzung ist es auch möglich, die Halterung in ihrer Ruheposition auf den Laderaumboden oder auf die Wandbegrenzung aufzusetzen. Dies hat den Vorteil, dass für die Aufnahme der Halterung keine zusätzliche Mulde im Laderaumboden oder in der Wandbegrenzung vorgesehen sein muss.

In weiterer Ausgestaltung der Erfindung weist die Halterung wenigstens zwei beweglich angeordnete Halterungsbereiche auf, die aus einer in der Halterung zusammengeführten Ruhelage in eine zueinander beabstandete und wenigstens eine Aufnahmetasche zwischen den Halterungsbereichen aufnehmende Funktionslage überführbar sind. Bei dieser Ausführungsform können die Halterungsbereiche in der Ruhelage insbesondere kompakt zusammengeklappt sein. Für die Funktionslage werden diese zu den Seiten hin nach aussen geklappt, so dass sie parallel zueinander ausgerichtet sind. Bei einer besonders vorteilhaften Ausführungsform sind die Halterungsbereiche an der Halterung horizontal schwenkbeweglich angeordnet. Vorzugsweise klappen sie zur Mitte des Laderaumbodens hin aufeinander zu. Beim Aufklappen um einen Winkel von vorzugweise jeweils 90° stellt sich die parallele und beabstandete Ausrichtung der gegenüberliegenden Halterungsbereiche ein.

In weiterer Ausgestaltung der Erfindung ist der Aufnahmevorrichtung ein horizontal ausziehbares Abdeckgebilde zugeordnet, das die wenigstens eine Aufnahmetasche in einer Ausziehposition überdeckt. Vorzugsweise ist die Halterung, vorzugweise mit beiden Halterungsbereichen, derart unterhalb einer Fahrzeugbordkante angeordnet, dass eine ohnehin vorhandene, horizontal ausziehbare Abdeckplane die Abdeckfunktion für die wenigstens eine Aufnahmetasche übernehmen kann. Im Bereich der Halterungsbereiche sind vorzugweise entsprechende Halteaufnahmen zur Fixierung des Abdeckgebildes in unterschiedlichen Ausziehpositionen vorgesehen.

Weitere Vorteile und Merkmale der Erfindung ergeben sich aus den Ansprüchen. Nachfolgend sind bevorzugte Ausführungsbeispiele der Erfindung beschrieben und anhand der Zeichnungen dargestellt.
- Fig. 1: zeigt schematisch in einer teilweise aufgeschnittenen Seitenansicht einen in einem heckseitigen Laderaum eines KombiPersonenkraftwagens angeordnete Ausführungsform einer erfindungsgemäßen Aufnahmevorrichtung,
- Fig. 2: eine Darstellung ähnlich Fig. 1 mit einer modifizierten Aufnahmevorrichtung,
- Fig. 3: eine Darstellung ähnlich den Fig. 1 oder 2 mit einer modifizierten Aufnahmevorrichtung,
- Fig. 4: in vergrößerter, perspektivischer Darstellung eine Aufnahmevorrichtung gemäß Fig. 1 oder 3,
- Fig. 5: schematisch einen Laderaum eines Kraftfahrzeuges mit einer weiteren Ausführungsform einer erfindungsgemäßen Aufnahmevorrichtung,
- Fig. 6: den Laderaum nach Fig. 5 in einer anderen Perspektive,
- Fig. 7: in vergrößerter perspektivischer Darstellung einen Ausschnitt der Aufnahmevorrichtung nach Fig. 6,
- Fig. 8: in vergrößerter perspektivischer Darstellung einen weiteren Ausschnitt der Aufnahmevorrichtung nach Fig. 5,
- Fig. 9: in perspektivischer Darstellung einen Laderaum mit einer weiteren Ausführungsform einer erfindungsgemäßen Aufnahmevorrichtung, wobei aus Übersichtlichkeitsgründen eine linke Hälfte der Aufnahmevorrichtung dargestellt ist,
- Fig. 10: in vergrößerter, perspektivischer Explosionsdarstellung einen mit einem Adaptermittel für einen Haltekopf versehenen Stützabschnitt, der in einer fahrzeugfesten Aufnahme fixierbar ist,
- Fig. 11: zwei benachbarte Stützabschnitte gemäß Fig. 10 in zusammengefügter Halteposition,
- Fig. 12: zwei Aufnahmetaschen, deren Stützprofile durch elastische Fixiermittel derart miteinander verbunden sind, dass sich ein Aufnahmetaschenpaar ergibt,
- Fig. 13: das Aufnahmetaschenpaar nach Fig. 12 in einer zusammengelegten Zwischenposition,
- Fig. 14: das Aufnahmetaschenpaar nach den Fig. 12 und 13 in der fest verschnürten und zusammengerollten Ruheposition,
- Fig. 15: das Aufnahmetaschenpaar nach Fig. 12, dessen Stützprofile im Bereich ihrer Halteköpfe mit als Gruppierungseinheiten dienenden Klammmern umgebbar sind,
- Fig. 16: das Aufnahmetaschenpaar nach Fig. 15 in der zusammengeschnürten Ruheposition, wobei die klammerförmige Gruppierungseinheit in einem entsprechenden Aufnahmebereich des seitlichen Halterungsbereiches lösbar fixiert ist,
- Fig. 17: in perspektivischer Explosionsdarstellung eine Ausführungsform einer Aufnahmetasche mit stirnseitigen Seitenfaltabschnitten sowie mit einem zweigeteilten Einlegeboden,
- Fig. 18: die Aufnahmetasche nach Fig. 17 in ihrer umgedrehten, den Boden nach oben weisenden Position,
- Fig. 19: in perspektivischer Darstellung eine Ausführungsform einer erfindungsgemäßen Aufnahmevorrichtung, die durch eine horizontale Abdeckplane eines Abdeckrollos überdeckbar ist,
- Fig. 20: eine weitere Ausführungsform einer Aufnahmevorrichtung, bei der die seitlichen Halterungsbereiche mit ausziehbaren Längsführungen versehen sind, in denen mehrere Aufnahmetaschen mit stirnseitigen Halteköpfen oder mit korrespondierenden Adaptermitteln fixierbar sind,
- Fig. 21: die Ausführungsform nach Fig. 20, wobei die Längsführung in der eingeschobenen Stauposition dargestellt ist,
- Fig. 22: schematisch eine weitere Ausführungsform einer erfindungsgemäßen Aufnahmevorrichtung in einem Kofferraum eines Personenkraftwagens,
- Fig. 23: die Aufnahmevorrichtung nach Fig. 22 in ihrer Funktionsposition,
- Fig. 24: eine Darstellung eines Aufnahmetaschenpaares mit einem mittleren, gemeinsamen Stützabschnitt,
- Fig. 25: eine weitere Ausführungsform eines Aufnahmetaschenpaares, wobei die Falten seitlich offen sind,
- Fig. 26: eine weitere Ausführungsform einer erfindungsgemäßen Aufnahmevorrichtung mit teleskopförmig ausziehbaren Längsführungen an den seitlichen Halterungsbereichen für wenigstens eine Aufnahmetasche,
- Fig. 27: schematisch in perspektivischer Explosionsdarstellung eine Ausführungsform einer Aufnahmetasche mit versteiftem Einlegeboden,
- Fig. 28: in vergrößerter, schematischer Darstellung einen Ausschnitt des Einlegebodens nach Fig. 27,
- Fig. 29: eine weitere Ausführungsform einer Falttasche mit im Bodenbereich angeordneten Hohlprofilen,
- Fig. 30: einen Ausschnitt der Falttasche nach Fig. 29, wobei in die Hohlprofile elastische Zugmittel eingezogen sind,
- Fig. 31: eine weitere Ausführungsform einer Falttasche ähnlich Fig. 29 und 30, wobei scherenartige Zugmittel zum Zusammenfalten der Aufnahmetasche vorgesehen sind,
- Fig. 33: schematisch eine Darstellung einer aus zwei als Führungsschienen gestalteten Halterungsbereichen zusammengesetzten Halterung für ein längsbewegliches Stützprofil,
- Fig. 34: schematisch in einer Seitenansicht die Ausführung nach Fig. 33,
- Fig. 35: in schematisierter Darstellung eine Ausführung einer Aufnahmevorrichtung ähnlich Fig. 22,
- Fig. 36: in einer Draufsicht schematisch eine Ausführungsform einer Aufnahmevorrichtung mit mehreren Arretierpositionen für die Stützprofile,
- Fig. 37: in vergrößerter Schnittdarstellung ein Stützprofil im Bereich von Blockiermitteln der Halterung,
- Fig. 38: eine Darstellung ähnlich Fig. 37 mit modifizierten Blockiermitteln,
- Fig. 39: in perspektivischer Darstellung eine weitere Ausführungsform einer Aufnahmevorrichtung mit einem verschiebbarem Kassettengehäuse,
- Fig. 40: die Aufnahmevorrichtung nach Fig. 39 in einer Entnahmeposition des Kassettengehäuses und
- Fig. 41: in vergrößerter, schematischer Darstellung eine Ausführungsform ähnlich der Fig. 33 oder 36, bei der den Halteköpfen eine Antriebsvorrichtung in Form einer Rückholfeder zugeordnet ist.

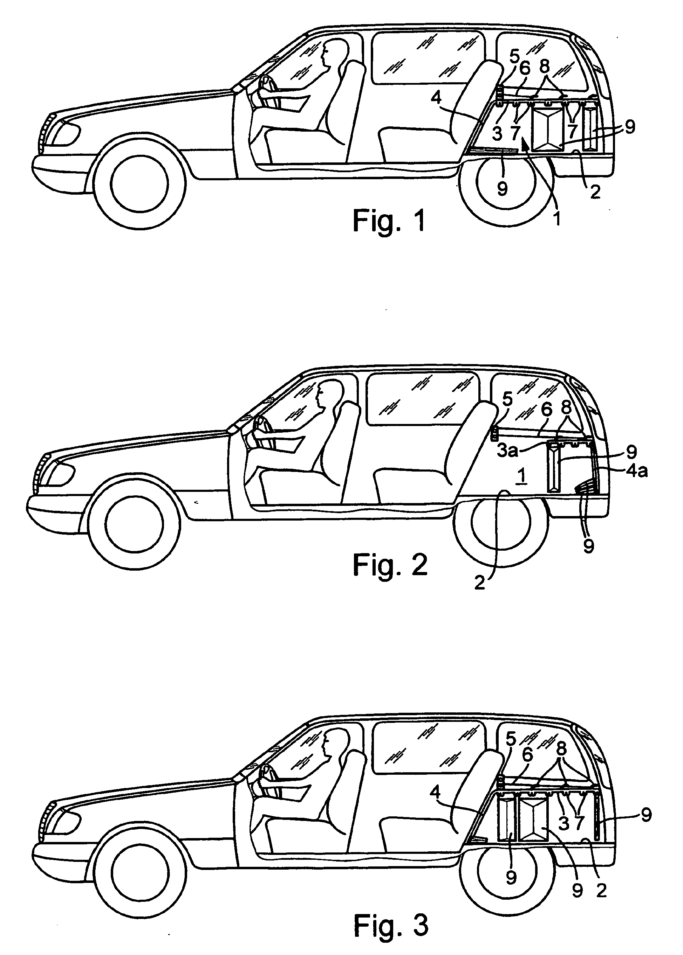

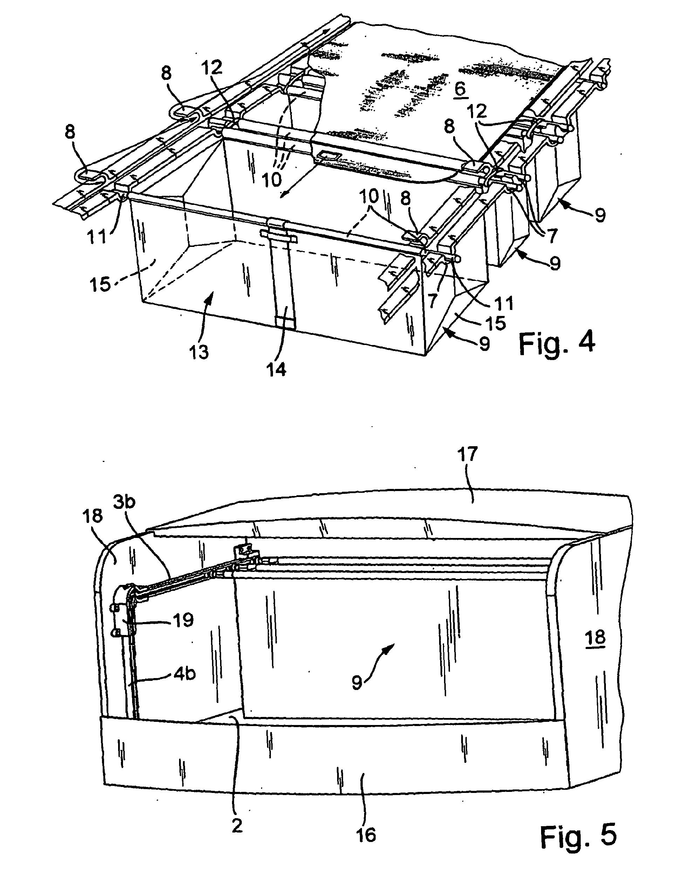

Ein Kombipersonenkraftwagen gemäß den Fig. 1 bis 3 ist gemäß Fig. 1 in einem heckseitigen Laderaum 1 mit einer Aufnahmevorrichtung versehen, die beim dargestellten Ausführungsbeispiel zwei Aufnahmetaschen 9 aufweist. Die beiden Aufnahmetaschen 9 bestehen jeweils aus einem Faltgebilde, das im aufgefalteten Zustand kastenartig gestaltet und nach oben hin offen ist. Gegenüberliegende Längsseiten jeder Aufnahmetasche 9 sind in ihrem oberen Randbereich jeweils mit einem formstabilen Stützprofil (Fig. 4) 10 versehen. Jedes Stützprofil 10 ist in einen Saum des vorzugsweise aus flexiblem Material bestehenden Faltgebildes 13 eingeschlagen und so fest in diesem verankert. Jedes Stützprofil 10 erstreckt sich über die gesamte Länge der Längsseite der Aufnahmetasche 9 und ragt mit stirnseitigen Halteköpfen 11 auf gegenüberliegenden Stirnseiten jeweils über die Aufnahmetaschen 9 hinaus. Beim dargestellten Ausführungsbeispiel sind die Halteköpfe einstückige Verlängerungen oder Fortsätze des Stützprofiles, so dass die Halteköpfe 11 den gleichen Querschnitt aufweisen wie die Stützprofile 10. Das Faltgebilde 13 ist somit an jeweils zwei Stützprofilen 10 aufgehängt. Die Aufnahmetaschen 9 sind mit ihren Längsseiten in Fahrzeugquerrichtung ausgerichtet und derart in einer laderaumseitigen Halterung 3, 7 eingehängt, dass die Stützprofile sich horizontal und in Fahrzeugquerrichtung erstrecken. Um die Halteköpfe 11 der Stützprofile 10 einhängen zu können, weist die Halterung auf gegenüberliegenden Laderaumseiten jeweils einen Halterungsbereich auf, der beim dargestellten Ausführungsbeispiel durch jeweils eine über zumindest einen Teil der Länge des Laderaumes horizontal verlaufende Aufnahme- und Führungsschiene 3 gebildet ist. In der Aufnahme- und Führungsschiene 3 sind mehrere Aufnahmen 7 vorgesehen, die beim dargestellten Ausführungsbeispiel als muldenartige, zum Teil paarweise angeordnete Vertiefungen gestaltet sind. Die Vertiefungen sind derart auf den Querschnitt der Halteköpfe 7 abgestimmt, dass sich eine formschlüssige Aufnahme ergibt.

Wie anhand der Fig. 4 erkennbar ist, sind jeweils zwei benachbarte Stützprofile 10 zweier Aufnahmetaschen durch eine als Gruppierungseinheit geeignete Klammer 12 miteinander verbunden, wobei die Klammer elastisch oder unelastisch gestaltet sein kann. Die Klammer 12 ist bügelförmig ausgeführt, wie anhand der Fig. 4 erkennbar ist, so dass sie zwei Stützprofile im Bereich der Haltegriffe 11 umgreifen kann.

Der Aufnahmevorrichtung ist zusätzlich eine Laderaumsicherung 5 zugeordnet, die eine horizontal ausziehbare Abdeckplane 6 aufweist. Die horizontale Abdeckplane 6 verläuft knapp oberhalb der Halterungsbereiche 3 und unterhalb einer Fahrzeugbordkante. Die Halterungsbereiche, die auf gegenüberliegenden Seiten des Laderaumes 1 fahrzeugseitig verankert sind, weisen an ihrer Oberseite zur Arretierung der Abdeckplane 6 in wenigstens einer definierten Ausziehposition Haltepunkte, vorliegend in Form von Einhängehaken 8, auf, die einander an den gegenüberliegenden Halterungsbereichen paarweise gegenüberliegen. Es sind mehrere Paare von Einhängehaken 8 über die Länge der Halterungsbereiche verteilt angeordnet, um eine Arretierung der Abdeckplane 6 in mehreren Ausziehpositionen zu ermöglichen. Die Abdeckplane 6 dient dazu, die nach oben offenen Aufnahmetaschen 9 zu überdecken, um zum einen ein Herausschleudern von Gegenständen aus den Aufnahmetaschen zu verhindern, und zum anderen, um einen Sichtschutz des Inhaltes der Aufnahmetaschen 9 zu gewährleisten.

Wie anhand der Fig. 1 bis 3 oder anhand der Fig. 5 bis 7 erkennbar ist, sind die Halterungsbereiche durch gegenüberliegende Führungsschienen 4, 4a, 4b front- oder heckseitig des Laderaumes 1 zu dem Laderaumboden 2 hin nach unten geführt. Die Führungsschienen 4, 4a, 4b wie auch die Führungsschienen 3 sind derart ausgelegt, dass die Halteköpfe 11 der Aufnahmeschienen in diesen Führungsschienen verschiebbar angeordnet sind. Da die Aufnahmetaschen 9, wie nachfolgend noch näher beschrieben werden wird, in eine kompakte Ruheposition zusammenfaltbar, zusammenrollbar oder in anderer Art und Weise zusammenlegbar sind, ist es möglich, die Aufnahmetaschen 9 bei Nichtgebrauch front- oder heckseitig am Laderaumboden 2 abzulegen (Fig. 1 bis 3). Dadurch sind sie platzsparend untergebracht und können bei Bedarf in einfacher Weise wieder in ihre Funktionsposition verschoben werden. Da sie auch in ihrer Ruheposition in den seitlichen Führungsschienen 4, 4a, 4b verankert bleiben, sind sie auch in ihrer Ruheposition positionsgesichert, so dass ein Umherrutschen im Laderaum vermieden wird.

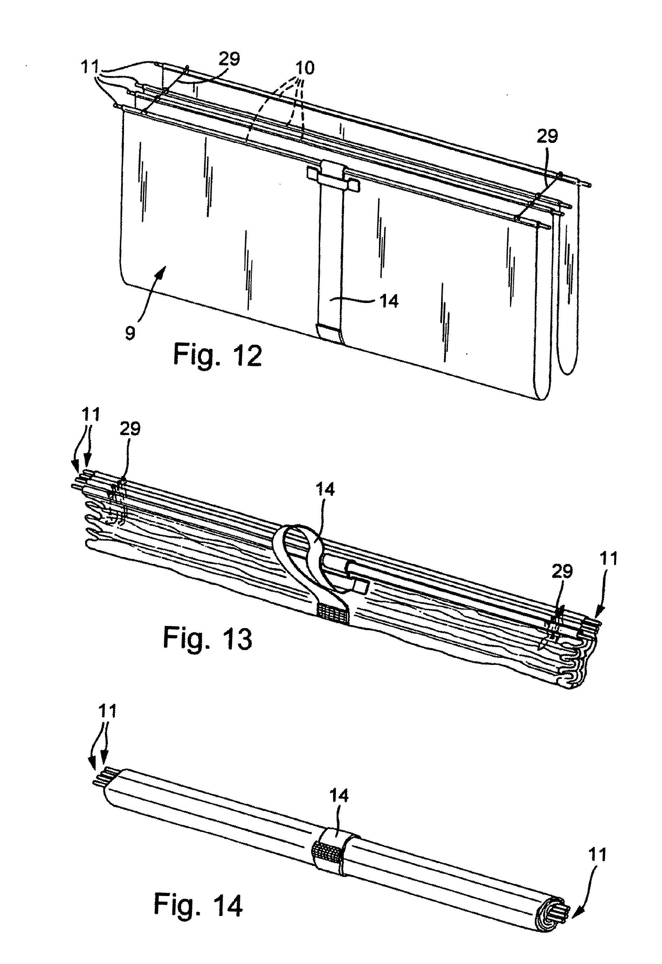

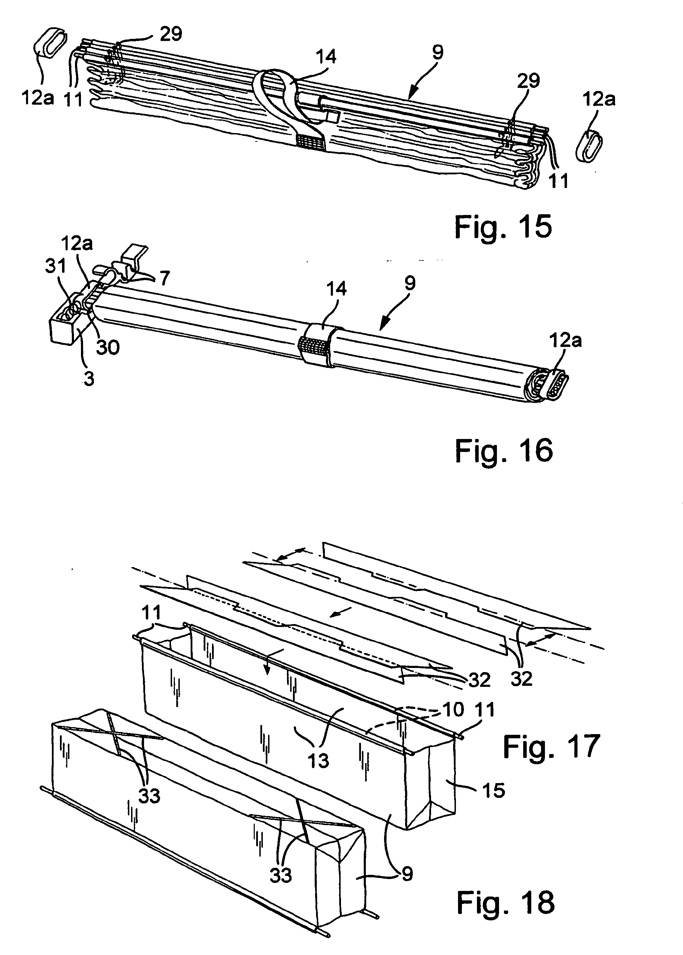

Der Aufbau der Aufnahmetaschen 9 ist anhand der Fig. 12 bis 18 gut erkennbar. Die dargestellten Ausführungsbeispiele gehen von zwei unterschiedlichen Varianten aus. Beide Varianten haben gemeinsam, dass jeweils ein Faltgebilde einer Aufnahmetasche 9 an zwei längs erstreckten Stützprofilen aufgehängt ist. Das Faltgebilde ist bei der einen Variante gemäß Fig. 12 lediglich bahnförmig gestaltet, so dass sich eine nach unten durchhängende, jedoch zu den gegenüberliegenden Stirnseiten hin offene Falte ergibt. Die andere Variante (Fig. 18) weist im aufgefalteten Zustand eine quaderartige Form auf. Hier ist das Faltgebilde an gegenüberliegenden Stirnseiten zusätzlich mit jeweils einem Stirnfaltabschnitt 15 versehen, der die stirnseitigen Seitenwände für das Faltgebilde und die Aufnahmetasche ergibt. Bei dieser Variante ist die Aufnahmetasche somit rundum geschlossen und lediglich nach oben hin offen.

Beide Varianten sind symmetrisch zu ihrer Mittellängsebene, in der Funktionsposition somit in einer Vertikalebene, auf eine schmale Dicke zusammenfaltbar. Zumindest die Variante nach Fig. 12 ist zudem auch zusammenrollbar, da das flexible Flächengebilde lediglich bahnförmig ausgebildet ist. Bei der Variante nach Fig. 18 ist es möglich, in die Wandungsabschnitte des Faltabschnittes dünne, plattenförmige Versteifungen einzubetten, um die Stabilität des Faltgebildes und der Aufnahmetasche zu erhöhen.

Um die Zusammenfaltbewegung der Aufnahmetasche gemäß den Fig. 17 und 18 zu unterstützen, sind bodenseitig elastische Zugmittel 33 vorgesehen, die im aufgespannten Zustand des Flächengebildes gemäß den Fig. 17 und 18 auf den Boden eine Zugbelastung ausüben, so dass nach kurzem Anstoßen in Richtung des Einfaltens die Zusammenfaltbewegung durch die Zugkräfte der Spannmittel 33 unterstützt wird.

Bei den Aufnahmetaschen gemäß Fig. 12 sind zwei Aufnahmetaschen paarweise im Bereich ihrer Oberseite, d.h. dem Bereich der Stützprofile 10, durch elastische Spannmittel 29 miteinander verbunden. Diese Spannmittel 29 verhindern, dass die Aufnahmetaschen zu weit aufgezogen werden.

Entsprechend umgekehrt zu der Variante nach den Fig. 17 und 18 ist es bei einem nicht dargestellten Ausführungsbeispiel der Erfindung möglich, elastische Zugmittel einzusetzen, um die Aufnahmetasche aus der zusammengefalteten Position in die aufgefaltete Aufnahmeposition zu überführen oder diese Auffaltbewegung zumindest zu unterstützen. Derartige Spannmittel können als Druckmittel ausgebildet sein. Es können auch Zugmittel vorgesehen sein, falls die Zugkräfte so eingesetzt werden, dass die Auffaltbewegung der Aufnahmetasche erzielt wird.

Wie anhand der Fig. 17 erkennbar ist, ist es auch möglich, einen Boden des Faltgebildes 13 durch einen Einlegeboden 32 zu versteifen. Der Einlegeboden 32 besteht beim dargestellten Ausführungsbeispiel aus zwei Teilen, die entweder stumpf aneinandergefügt oder einander überlappend zusammengefügt werden, wie anhand der Explosionsdarstellungen erkennbar ist. An ihren Aussenseiten sind die beiden Einlegeböden 32 derart trapezartig abgeschrägt, dass eine Einfaltbewegung der Seitenfaltabschnitte 15 nicht behindert wird.

Dem Aufnahmetaschenpaar gemäß Fig. 12 ist ein Schnürgurt 14 zugeordnet, der das Aufnahmetaschenpaar gemäß den Fig. 13 und 14 in eine kompakte, zusammengelegte und/oder zusammengerollte Ruheposition zusammenschnüren kann. Wie anhand der Fig. 15 und 16 erkennbar ist, ist es zudem möglich, die auf den gegenüberliegenden Stirnseiten seitlich herausragenden Halteköpfe 11 der Stützprofile 10 beider Aufnahmetaschen 9 durch eine als Gruppierungseinheit dienende Klammer 12a zusammenzufalten. In den gegenüberliegenden Halterungsbereichen der laderaumseitigen Halterung ist für die jeweilige Klammer 12a jeweils eine Aufnahme 30 vorgesehen, in der die Klammer 12a lösbar gehalten werden kann. Die Sicherung der Klammer 12a in der Aufnahme 30 ist bei der Ausführung nach Fig. 16 durch eine schematisch dargestellte Rückhaltefeder 31 unterstützt.

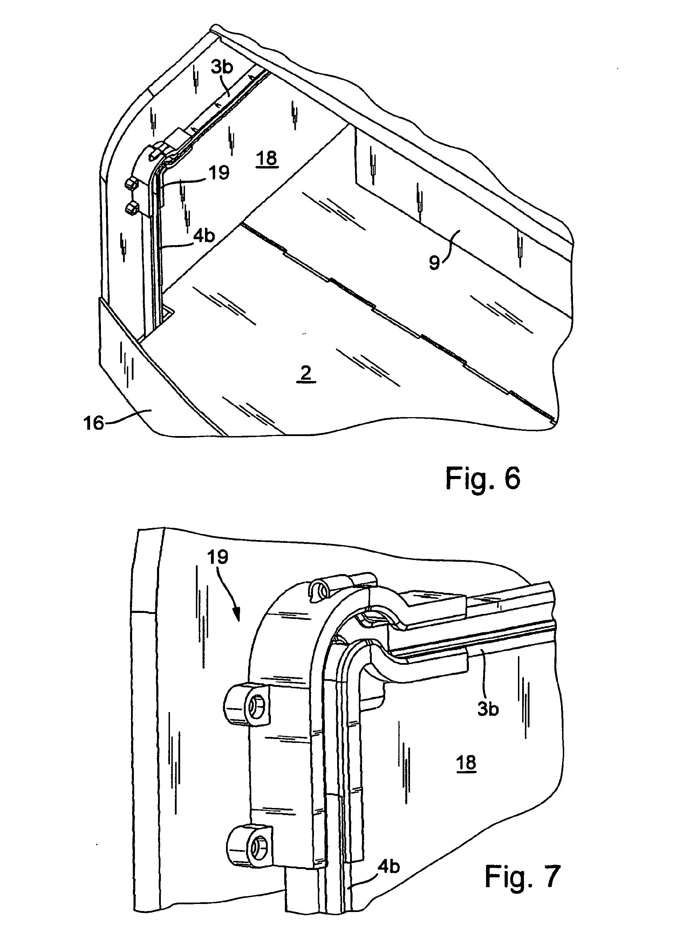

Wie anhand der Fig. 5 bis 8 erkennbar ist, sind den Halteköpfen der Stützprofile 10 der Aufnahmetaschen 9 Adaptermittel 20 in Form von Gleit- oder Rollelementen zugeordnet, die in jeweils einer Führungsschiene des Halterungsbereiches 3b längsbeweglich geführt sind. Der Übergang der horizontalen Führungsschienen zu den vertikal nach unten führenden Führungsschienen 4b (Fig. 5) erfolgt durch eine Schikaneanordnung 19, die anhand der Fig. 5 bis 7 detailliert dargestellt ist. Wie insbesondere in Fig. 7 erkennbar ist, ist eine Führungsnut, die auch die Führungsschienen 3b, 4b aufweisen, in dieser Schikaneanordnung 19 fortgeführt, wobei anschließend an die Führungsschiene 3b die Führungsnut zunächst nach oben und erst anschließend in die vertikale Richtung nach unten gekrümmt ist. Hierdurch wird verhindert, dass die Aufnahmetaschen 9 beim Nachhintenrutschen widerstandslos in die vertikalen Führungsschienen 4b geraten und somit nach unten fallen. Beim Nachhintengleiten oder -rollen laufen die Gleit- oder Rollelemente der Adaptermittel 20 gegen die nach oben gekrümmte Schikane an, wodurch diese einen Anschlag bildet. Ohne ein manuelles und damit gewolltes nach oben Bewegen der Stützprofile können die Roll- oder Gleitelemente nicht in die vertikal nach unten verlaufende Führungsschiene 4b überführt werden.

Wie anhand der Fig. 5 und 6 erkennbar ist, ist der Laderaum heckseitig im Bereich des Laderaumbodens 2 durch einen Heckspiegel 16 begrenzt, der um einen bestimmten Betrag über den Laderaumboden 2 nach oben abragt. In diesem Bereich können die Aufnahmetaschen abgelegt werden, ohne dass die Be- und Entladeöffnung des Laderaumes durch diese Aufnahmetaschen in ihrer Größe beeinträchtigt wird. Der anhand der Fig. 5 bis 8 dargestellte Laderaum stellt insbesondere einen Laderaum für eine Stufenhecklimousine in einem Heckbereich dieses Fahrzeugs dar. Mit dem Bezugszeichen 17 ist eine schematisch dargestellte, obere Begrenzung des Laderaumes bezeichnet, die an einen nicht dargestellten Heckdeckel in Fahrzeuglängsrichtung nach vorne anschließt. Seitlich ist der Laderaum durch Seitenwandungen 18 begrenzt. An diesen Seitenwandungen 18 sind die Führungsschienen 3b, 4b und die Schikaneanordnung 19 des jeweiligen Halterungsbereiches befestigt.

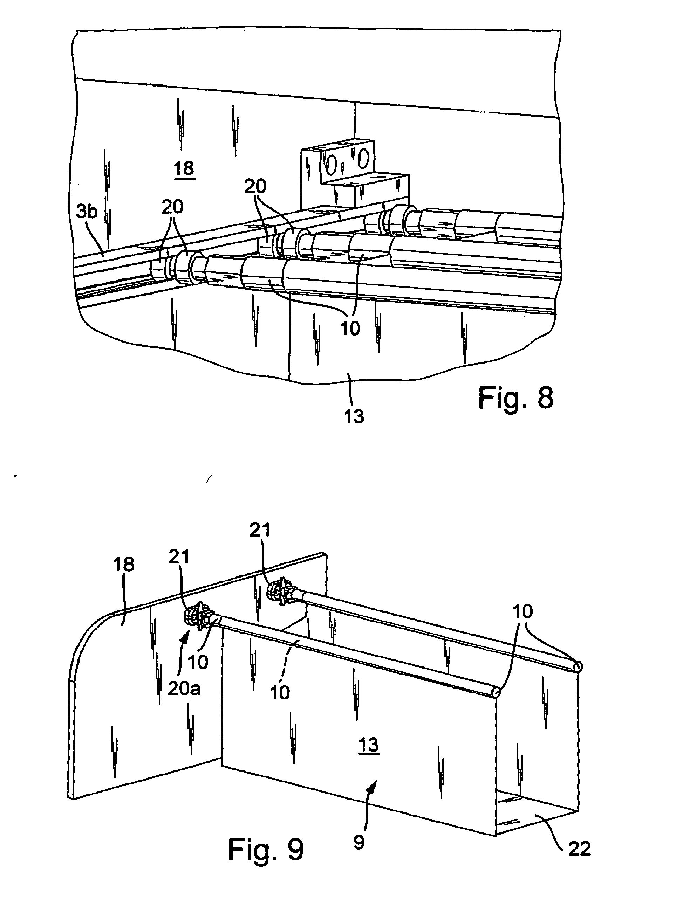

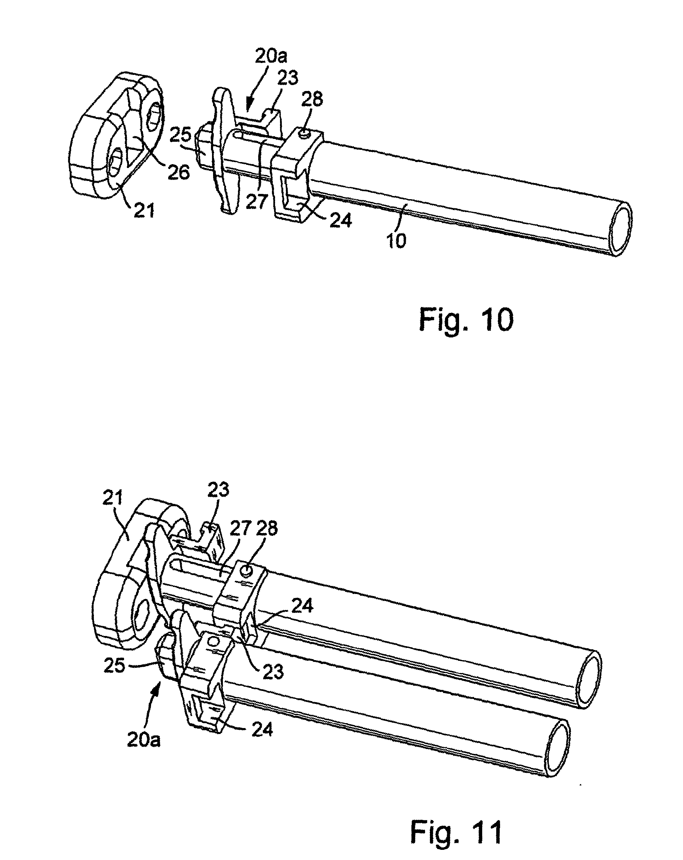

Bei der Ausführungsform nach den Fig. 9 bis 11 sind die Stützprofile 10 im Bereich ihrer seitlich nach aussen abragenden Halteköpfe der Aufnahmetasche 9 mit Adaptermitteln 20a versehen, die zum Einhängen in fahrzeugseitige Halterungsbereiche 21 mit Steckzapfen 25 versehen sind. Entgegen der mit Führungsschienen versehenen Ausführungsform einer Halterung gemäß den zuvor beschriebenen Darstellungen werden die Halterungsbereiche an den gegenüberliegenden Seitenwandungen 18 lediglich durch Steckaufnahmen gebildet, die jeweils eine nach oben offene Stecknut 26 aufweisen. Diese Stecknut 26 ist derart auf den anhand der Fig. 10 und 11 erkennbaren Steckzapfen jedes Stützprofiles 10 abgestimmt, dass der Steckzapfen 25 von oben her in die Stecknut 26 einführbar und formschlüssig in dieser gehalten ist. Beim dargestellten Ausführungsbeispiel weist der Steckzapfen 25 ein quaderartiges Profil auf, so dass ein Verdrehen des Adaptermittels 20a und damit des Stützprofiiles in der Stecknut 26 im eingehängten Zustand verhindert ist. Das Adaptermittel 20a jedes Stützprofiles ist relativ zu dem Stützprofil 10 längs verschiebbar angeordnet. Hierzu ist dem einen zylindrischen Fortsatz des Adaptermittels 20a ein Führungsschlitz 27 zugeordnet, in den ein Kullissenzapfen 28 eingreift, der fest am Stützprofil 10 angeordnet ist. In nicht näher dargestellter Weise ist zudem ein Fixierelement vorgesehen, das das Adaptermittel 20 in der gewünschten Ausziehposition arretiert wird, um zu verhindern, dass sich durch Relativbewegungen im Fahrbetrieb der zylindrische Fortsatz des Adaptermittels 20a wieder in das Stützprofil 10 zurückschieben kann, wodurch unter gewissen Umständen der Steckzapfen 25 aus der Stecknut 26 herausgleiten könnte. Der fest mit dem Stützprofil 10 verbundene Aufnahmeblock, in dem der Kulissenzapfen 28 angeordnet ist, ist zudem mit einer Rastnut 24 versehen, die zur Seite hin abragt. In diese Rastnut ist ein korrespondierender Rasthaken 23 eines benachbarten Adaptermittels 20a einrastbar, um ein benachbartes Stützprofil in einer parallel anliegenden Position gemäß Fig. 11 zu fixieren. Hierdurch ist es möglich, auch mehrere Stützprofile 10 benachbarter Aufnahmetaschen miteinander zu verbinden. Falls zwei Stützprofile einer einzelnen Aufnahmetasche miteinander verbunden werden, so ist durch diese Verbindung zwangsläufig die Aufnahmeöffnung zur Be- und Entladung der Aufnahmetasche verschlossen.

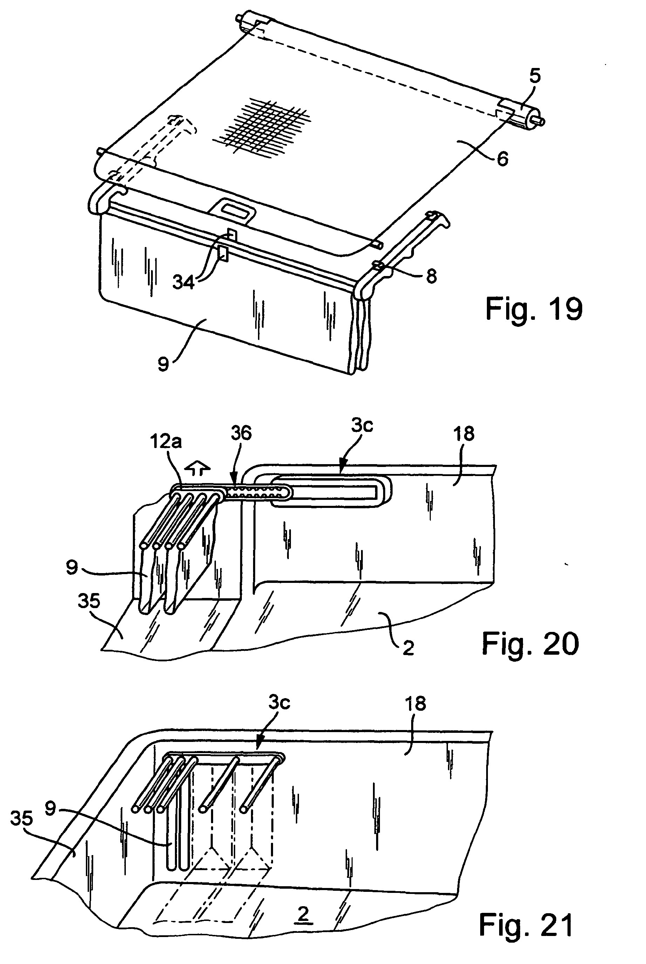

Die in Fig. 19 dargestellte Ausführungsform entspricht im wesentlichen den Ausführungsformen, wie sie anhand der Fig. 1 bis 4 beschrieben worden sind, so dass auf die dortige Offenbarung verwiesen wird. Einziger Unterschied ist es, dass hier die Aufnahmetasche 9 Öffnungshilfen in Form von Grifflaschen 34 im Bereich der Stützprofile aufweist. Hierdurch ist ein Aufziehen der Aufnahmeöffnung der Aufnahmetasche erleichtert.

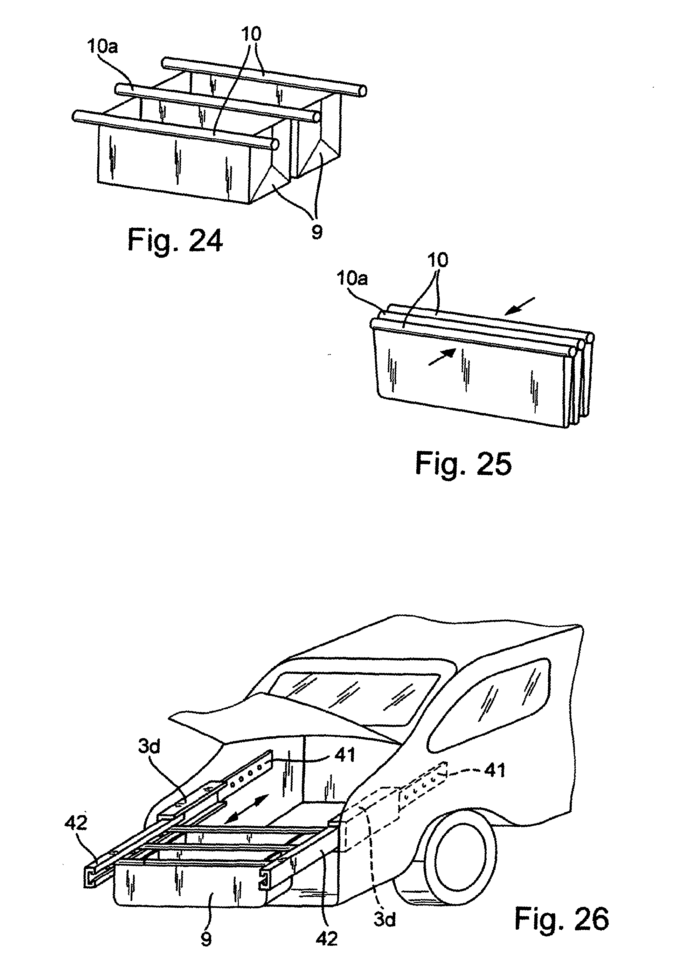

Beim Ausführungsbeispiel nach den Fig. 20 und 21 sind die gegenüberliegenden Halterungsbereiche 3c im Bereich der Seitenwandungen 18 des Laderaumes mit teleskopförmig ausziehbaren Führungsschienen versehen. Eine ähnliche teleskopförmige Ausziehbarkeit ist auch bei den Halterungsbereichen 3d gemäß Fig. 26 vorgesehen. Die Halterungsbereiche 3c gemäß den Fig. 20 und 21 weisen jeweils eine längsverschiebbare Führungsschiene 36 auf, die zum einen mit Aufnahmen zum einzelnen Einsetzen von Halteköpfen von Aufnahmetaschen 9 versehen ist. Zum anderen ist auch eine Aufnahme für das Einsetzen einer Gruppierungseinheit 12a vorgesehen, die mehrere Aufnahmetaschen 9 zusammenfügt und mittels der diese Aufnahmetaschen 9 blockartig entfernt werden können. Die Entnehmbarkeit der Gruppeneinheit 12a aus der Führungsschiene 36 heraus nach oben ist durch die Pfeildarstellung verdeutlicht. Der Laderaum des Kraftfahrzeugs gemäß den Fig. 20 und 21 weist heckseitig einen abklappbaren Heckspiegel auf, wie er insbesondere bei nach oben offenen Ladeflächen von Nutz- oder Lastkraftwagen vorgesehen ist. Die Halterungsbereiche 3c sind derart angeordnet, dass die längsverschiebbaren Führungsschienen 36 über den abgesenkten Heckspiegel hinaus nach hinten gezogen werden können. Hierdurch ist eine vereinfachte Be- und Entladung von Aufnahmetaschen 9 ermöglicht. In Fig. 21 ist die geschlossene Stellung des Heckspiegels 35 und die eingeschobene Stellung des Halterungsbereiches 3c dargestellt.

Bei der Ausführungsform nach Fig. 26 sind die längsverschiebbaren Halterungsbereiche 3d in einem Laderaum einer Stufenhecklimousine vorgesehen. Die Halterungsbereiche 3d weisen hier laderaumseitig befestigte Führungsschienen 41 auf, an denen Hohlprofilschienen verschiebbar gelagert sind, auf die die Bezugszeichen 3d weisen. In diesen Hohlprofilschienen sind wiederum Teleskopschienen 42 längsverschiebbar gelagert, so dass sich in ausgezogenem Zustand - wie gezeigt - eine große Verlagerungsmöglichkeit der Aufnahmetaschen 9 nach hinten bzw. nach vorne längs des Doppelpfeiles ergibt.

Bei der Ausführungsform eines Aufnahmetaschenpaares gemäß den Fig. 25 und 25 weisen beide Aufnahmetaschen 9 jeweils ein getrenntes äußeres Stützprofil sowie ein gemeinsames inneres Stützprofil 10a auf, so dass die beiden Aufnahmetaschen 9 im Bereich des gemeinsamen Stützabschnittes 10a zwangsläufig und fest miteinander verbunden sind.

In Fig. 24 ist die Variante des Faltgebildes mit stirnseitigen Seitenfaltabschnitten dargestellt. In Fig. 25 ist die Variante mit bahnförmigen Faltgebilden gezeigt, bei denen die Aufnahmetaschen zu den Stirnseiten hin offen ist.

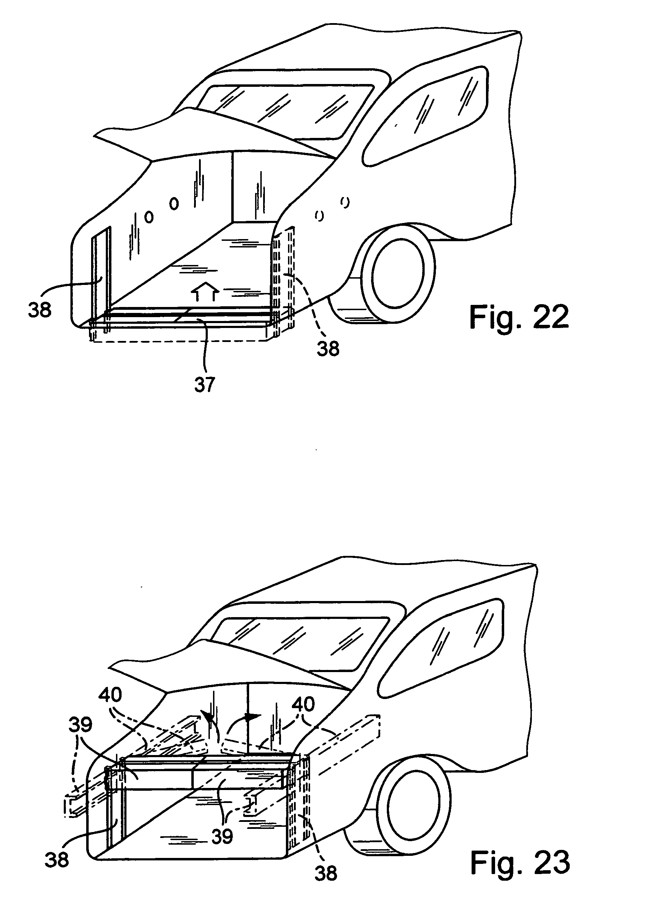

Bei der Ausführungsform nach den Fig. 22 und 23 ist die Halterung 37 zur Aufnahme und zur Sicherung entsprechender Aufnahmetaschen in einer Vertiefung des Laderaumbodens versenkt angeordnet. Die Halterung 37 erstreckt sich über die gesamte Breite des Laderaumbodens. Die Halterung 37 ist als kassettenartiges Gehäuse gestaltet und weist auf den gegenüberliegenden Stirnseiten jeweils Führungen auf, mittels deren die Halterung 37 in vertikal nach oben führenden Führungsschienen 38 höhenverlagerbar geführt ist. Zur Überführung der Halterung 37 in die Funktionsposition wird die Halterung 37 längs der Führungsschienen 38 nach oben bewegt. Dies kann manuell oder durch nicht näher dargestellte Antriebsmittel erfolgen. In der oberen Funktionsposition wird die Halterung arretiert. Anschließend klappen Halterungsbereiche 39, 40 nach vorne bzw. nach hinten um 90° aus, so dass sich sowohl vor der Halterung als auch hinter der Halterung jeweils zwei einander parallel gegenüberliegende Führungsschienen ergeben. Auch diese Führungsschienen 39, 40 werden in ihrer parallel und in Fahrzeuglängsrichtung ausgerichteten Funktionsposition arretiert. Nun können Aufnahmetaschen mit ihren entsprechenden Halteköpfen oder Adaptermitteln in die Führungsschienen eingesetzt werden. Zur erneuten Überführung in die Nichtgebrauchsposition werden die Halterungsbereiche in einfacher Weise wieder nach innen geklappt, wodurch die Halterung 37 erneut das kompakte Kassettengehäuse bildet und in diesem Zustand in die versenkte Ruheposition zurückgeführt werden kann.

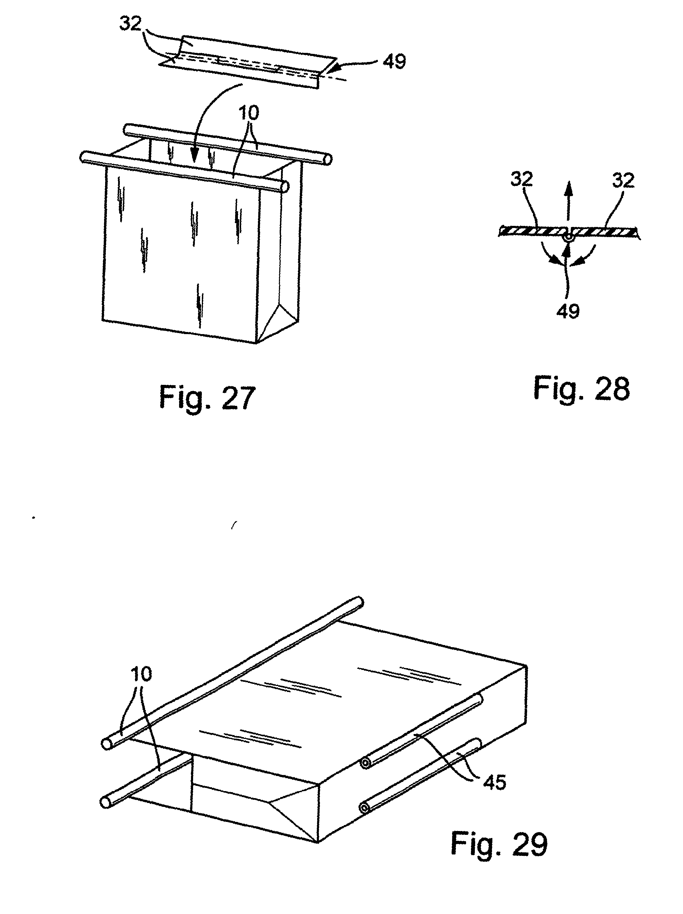

Eine Aufnahmetasche gemäß den Fig. 27 und 28 weist einen zweigeteilten Einlegeboden 32 auf, wobei die beiden Bodenteile mittels einer Scharnieranordnung 49 miteinander verbunden sind. Wie anhand der Fig. 28 erkennbar ist, ist die Scharnieranordnung so gestaltet, dass sie in der horizontalen, ebenen Funktionsposition stabil abgestützt ist, indem die beiden Bodenteile 32 mit ihren benachbarten Kanten aneinanderliegen. Sobald nun auf die Scharnieranordnung 49 von der Aussenseite des Bodenbereiches der Aufnahmetasche her eine Druck- oder Schubbewegung nach oben ausgeübt wird, falten sich die beiden Bodenteile 32 zwangsläufig in Pfeilrichtung zusammen, indem sie sich hochstellen. Dabei ist es zusätzlich möglich, dass die Bodenteile 32 des Einlegebodens abschnittsweise lösbar mit dem Bodenbereich des Faltgebildes der Aufnahmetasche verbunden sind, so dass zwischen dem Einlegeboden 32 und dem Faltgebilde eine Wirkverbindung hergestellt ist. Dadurch wird das Ein- oder Auffalten der Aufnahmetasche erleichtert.

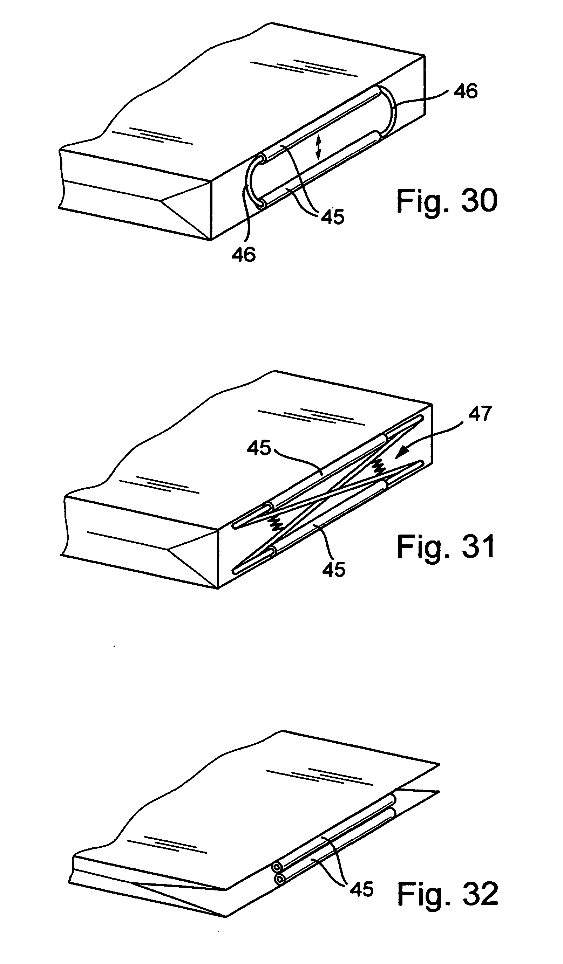

Bei den Ausführungsformen nach den Fig. 29 bis 32 sind Mittel zum zwangsläufigen Zusammenfalten der Aufnahmetasche aus ihrer aufgeklappten Funktionsposition vorgesehen. Hierzu sind aussenseitig in dem Bodenbereich der Aufnahmetasche zwei formstabile Hohlprofile 45 befestigt, die sich beim dargestellten Ausführungsbeispiel parallel zu den Stützprofilen 10, jedoch lediglich über einen Teil der Länge des Flächengebildes erstrecken. Bei der Ausführungsform gemäß Fig. 30 sind elastische Bänder 46 in den Hohlprofilen 45 teilweise integriert, die in der aufgeklappten Funktionsposition der Aufnahmetasche in ihren Spannzustand überführt sind. Aufgrund der entstehenden Zugbelastung unterstützen diese die Zufaltbewegung der Aufnahmetasche. Bei der Ausführungsform nach den Fig. 31 und 32 sind scherenförmig wirkende elastische Zugmittel 47 vorgesehen, die die Aufnahmetasche aus der Funktionsposition gemäß Fig. 31 zwangsläufig in die zusammengefaltete Ruheposition gemäß Fig. 32 überführen.

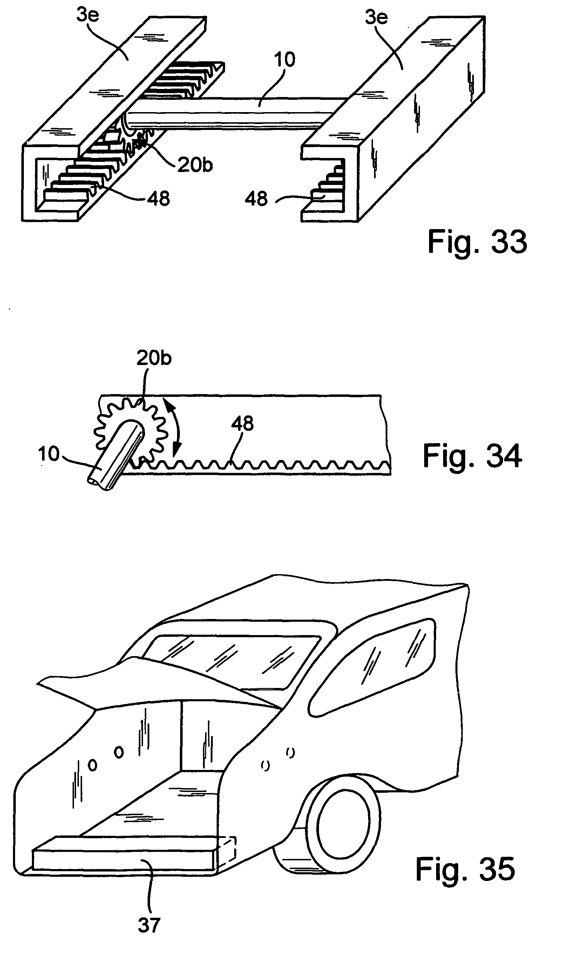

Die Ausführungsform gemäß den Fig. 33 und 34 offenbart schematisch Synchronisierungsmittel 20b, 48, um die Stützprofile 10 und damit gegenüberliegende Halteköpfe oder auch Gruppierungseinheiten relativ zu einer rechtwinklig zwischen den gegenüberliegenden Halterungsbereichen 3e verlaufenden Querachse parallel zu verlagern. Hierzu sind die die Faltgebilde tragenden Stützprofile 10 als Hohlprofile gestaltet, die von einer Welle durchsetzt sind. Die Welle ragt zu gegenüberliegenden Stirnseiten über die Stirnenden des jeweiligen Stützprofiles 10 hinaus. In diesen Endbereichen sind Adaptermittel in Form von Ritzen 20b vorgesehen, die mit jeweils einem Zahnstangenprofil 48 in jedem Halterungsbereich 3e kämmen. Die gegenüberliegenden Zahnstangenprofile 48 beider als Führungsschienen gestalteter Halterungsbereiche 3e sind identisch zueinander ausgeführt, so dass bei einer Verschiebung der Stützprofile 10 die gegenüberliegenden Ritzel 20b aufgrund gleicher Zahnteilung auf beiden Stirnseiten den gleichen Vorschub gewährleisten. Die Stützprofile 10 bleiben somit während ihrer Verschiebebewegung immer parallel zu einer sich zwischen den gegenüberliegenden Halterungsbereichen 3e erstreckenden Querachse und damit immer rechtwinklig zu den Längsachsen der Halterungsbereiche 3e.

Die Ausführungsform gemäß Fig. 35 entspricht im wesentlichen der Ausführung gemäß Fig. 22. Wesentlicher Unterschied ist es, dass hier die kassettenförmige Halterung 37 nicht im Laderaumboden versenkt, sondern vielmehr auf dem Laderaumboden angeordnet ist. Hier ist es möglich, die Höhenverlagerung der Halterung 37 mit Hilfe von Teleskopstangen oder anders gestalteten Höhenverlagerungsmitteln auszuführen.

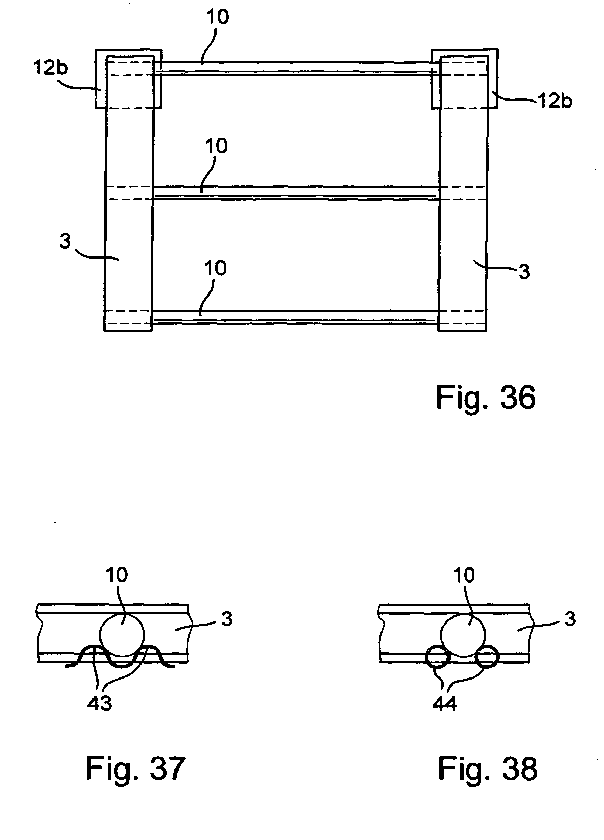

In Fig. 36 ist eine mit zwei parallelen Halterungsbereichen 3 versehene Halterung in schematischer Draufsicht von oben dargestellt. Der besseren Übersichtlichkeit halber ist lediglich ein einzelnes Stützprofil 10 zwischen zwei Gruppierungseinheiten 12b vorgesehen, die längs entsprechender Führungsschienen der Halterungsbereiche 3 verschiebbar sind. Alternativ ist es auch möglich, die Stützprofile 10 mit ihren Halteköpfen direkt, d.h. ohne Zusammenführung mittels einer Gruppierungseinheit, in den Führungsschienen zu verschieben. Um eine Arretierung oder Fixierung der Stützprofile 10 oder auch der Gruppierungseinheiten 12b in unterschiedlichen Positionen über die Längserstreckung der Haltebereiche 3 zu ermöglichen, sind Blockiermittel 43, 44 in den Führungsschienen an den Stellen untergebracht, an denen die Stützprofile 10 oder die Gruppierungseinheiten 12b arretiert werden sollen. Als Blockiermittel 43, 44 können Schenkel, Federn oder auch mit Kugeln versehene Raststellen 44 vorgesehen sein, wie sie anhand der Fig. 37 und 38 schematisch dargestellt sind.

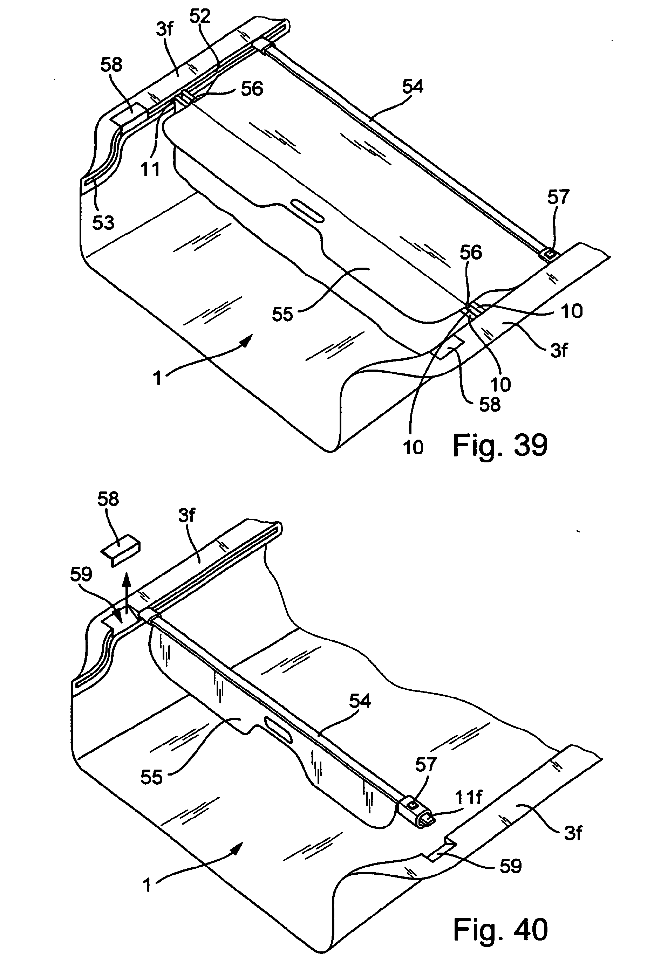

Bei einer Aufnahmevorrichtung gemäß den Fig. 39 und 40 sind im Bereich von gegenüberliegenden Seitenwandungen des Laderaumes 1 jeweils Längsführungen 3f vorgesehen, die jeweils mit einem zur Laderaummitte hin offenen Führungsschlitz 52 versehen sind. In den Führungsschlitzen 52 sind zum einen Halteköpfe 11 von Stützabschnitten 10 für Aufnahmetaschen gehalten, die in den Längsführungen 3f, d.h. längs der Führungsschlitze 52, verschiebbar angeordnet sind. Die Halterung und Führung der Halteköpfe 11 entspricht den zuvor beschriebenen Ausführungsbeispielen, so dass an dieser Stelle hierauf nicht näher eingegangen werden muss. Die Längsführungen 3f sind als Schienenprofile gestaltet, die jeweils auf gleicher Höhe mit jeweils einem offenen Teilabschnitt 59 versehen sind. Im Bereich der offenen Teilabschnitte 59 sind die Halteköpfe 11 und damit die Stützabschnitte 10 sowie die Aufnahmetaschen nach oben entnehmbar oder von oben in die Längsführungen 3f einsetzbar. Zum Verschließen der offenen Teilabschnitte sind Deckelelemente 58 vorgesehen, die von Hand entfernt oder eingesetzt werden können. Die Deckelelemente 58 sind mit entsprechenden Rast- oder Führungsrändern versehen, die in korrespondierende Rast- oder Führungsnuten der offenen Teilabschnitte 59 einpassbar sind und so eine sichere Positionierung der Deckelelemente 58 an den Längsführungen 3f ermöglichen.

Zusätzlich zu den Aufnahmetaschen ist in den Längsführungen 3f ein Kassettengehäuse 54 gehalten, das auf den gegenüberliegenden Stirnseiten jeweils mit einem Haltekopf 11f versehen ist. Der Haltekopf 11f auf jeder Stirnseite des Kassettengehäuses 54 ist derart ausgeführt, dass er zum einen eine Halterung des Kassettengehäuses 54 in den Längsführungen 3f ermöglicht. Zum anderen gewährleisten die Halteköpfe 3f eine Verschiebbarkeit des Kassettengehäuses 54 innerhalb der Führungsschlitze 52 der Längsführungen 3f. Zudem ist dem Kassettengehäuse eine Arretiereinrichtung 57 zugeordnet, die manuell lösbar gestaltet ist und eine Blockierung der Längsverschiebbarkeit des Kassettengehäuses 54 in den Führungsschlitzen 52 gewährleistet. Die Arretierungseinrichtung 57 weist in nicht erkennbarer Weise im Bereich wenigstens eines Haltekopfes 11f ein Bremselement auf, das eine form- oder kraftschlüssige Fixierung des Haltekopfes 11f in dem jeweiligen Führungsschlitz 52 erzielt. Durch ein Drücken eines Bedienknopfes der Arretiereinrichtung 57 wird die Brems- oder Blockierwirkung des Bremselementes aufgehoben, wodurch das Kassettengehäuse 54 verschiebbar ist. Das Kassettengehäuse 54 kann - wie anhand Fig. 40 erkennbar ist - bis zu den offenen Teilabschnitten 59 verschoben und an dieser Stelle nach oben entnommen werden. in gleicher Weise kann das Kassettengehäuse 54 im Bereich der offenen Teilabschnitte 59 auch wieder von oben her in die Führungsschlitze 52 eingesetzt werden.

Zu einem nicht näher dargestellten Heckbereich des Laderaumes 1 hin verjüngen sich die Längsführungen 3f und bilden Schlitzführungen 53. Diese sind zur Aufnahme seitlicher Führungselemente 56 eines Konturteiles einer Laderaumabdeckung 55 vorgesehen, die ein flexibles Flächengebilde darstellt. Das flexible Flächengebilde ist auf einer nicht näher dargestellten Wickelwelle innerhalb des Kassettengehäuses gehalten und relativ zu dieser auf- oder abwickelbar angeordnet. Die Laderaumabdeckung 55 selbst kann ebenfalls mit quer zur Ausziehrichtung verlaufenden, in gleichmäßigen Abständen über die Länge des Flächengebildes verteilt angeordneten Stützstäben versehen sein, die in den Führungsschlitzen 52 der Längsführungen 3f gehalten sein können. Die Höhe der Führungsschlitze 52 kann vorzugsweise so bemessen sein, dass die Stützstäbe mit ihren Stirnenden oberhalb der Halteköpfe 11 der Aufnahmetaschen in den Führungsschlitzen 52 vorbeigeführt werden können. Es ist auch möglich, die Laderaumabdeckung zwar mit stabilisierenden Stützstäben zu versehen, die jedoch nicht in den seitlichen Führungsschlitzen 52 geführt sind. Eine etwa horizontale Aufspannung des flexiblen Flächengebildes, d.h. der Laderaumabdeckung 55, erfolgt dann vorzugsweise durch ein Rückholkraft einer auf die Wickelwelle einwirkenden Rückholfeder.

Die Schlitzführungen 53 dienen dazu, das Konturteil der Laderaumabdeckung 55 mittels der Führungselemente 56 in aufgespannter Abdeckposition im Heckbereich des Laderaumes 1 zu fixieren. Zur Sicherung des Konturteiles und der Führungselemente 56 in den Schlitzführungen 53 sind nicht näher dargestellte Rastelemente in beiden Schlitzführungen 53 vorgesehen, die sowohl eine Sicherung der Laderaumabdeckung 55 im aufgespannten Zustand als auch eine Freigabe für ein Rückholen in die Ruheposition ermöglichen. Wie anhand der Fig. 39 erkennbar ist, sind die Schlitzführungen 53 gegenüber den Führungsschlitzen 52 weiter zur Laderaummitte hin versetzt angeordnet. Korrespondierend hierzu sind auch die Führungselemente 56 gegenüber den Halteköpfen 11 oder 11f zur Laderaummitte hin versetzt angeordnet. Korrespondierend hierzu sind auch die Führungselemente 56 gegenüber den Halteköpfen 11 oder 11f zur Laderaummitte in versetzt positioniert.

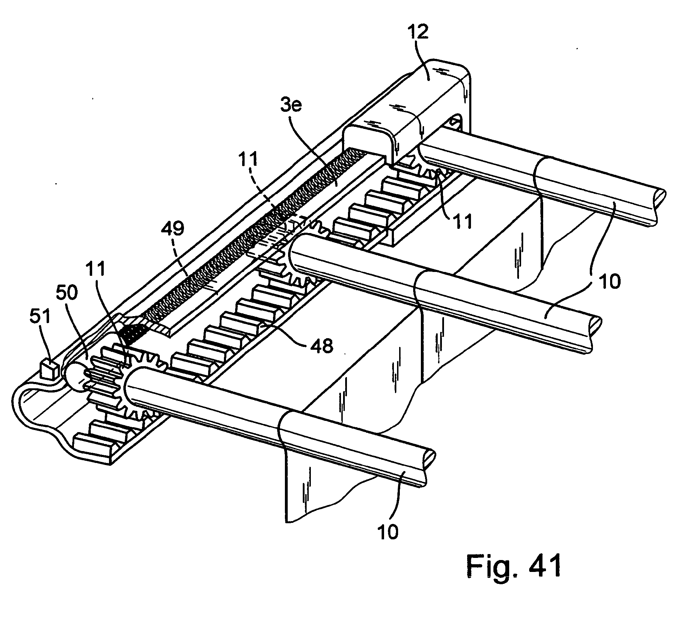

Bei der Ausführungsform nach Fig. 41 ist eine Gruppierungseinheit 12 im Bereich einer Längsführung 3e vorgesehen, wobei jede Gruppierungseinheit 12 Führungsabschnitte aufweist, die im eingesetzten Zustand der Gruppierungseinheit 12 mit einem Führungsschlitz der Längsführung 3e fluchten. Zudem ist eine bodenseitige Begrenzung des Führungsabschnittes mit einer Verzahnungsstruktur versehen, die eine Fortsetzung einer Verzahnungsstruktur des Führungsschlitzes der Längsführung 3e darstellt. Die Verzahnungsstruktur dient als Synchronisierungsmittel 48 für eine parallele Ausrichtbarkeit der Stützstäbe 10 für die Aufnahmetasche. Die Gruppierungseinheit 12 ist in Fig. 41 laderaumfest in Verlängerung der Längsführung 3e positioniert oder auch in einem entsprechenden offenen Teilabschnitt der Längsführung 3e oder einer entsprechenden Aussparung angeordnet. Die Gruppierungseinheit 12 kann aus dieser Position gelöst und entnommen werden. Gleichzeitig kann sie alle Stützstäbe 10 der Aufnahmetaschen aufnehmen, so dass die Gruppierungseinheit 12 auf jeder Seite der Aufnahmetaschen gemeinsam mit den Aufnahmetaschen entfernt werden kann.

Um ein automatisches Zurückziehen der Halteköpfe 11 und der Stützstäbe 10 in den Bereich der Gruppierungseinheiten 12 zu erzielen, ist eine Rückholeinrichtung 49 bis 51 vorgesehen. Die Rückholeinrichtung weist eine Rückholfeder 49 auf, die an einem mit dem vordersten Stützstab 10 des Aufnahmetaschenpaares angreifenden Adapterstück 50 befestigt ist. Mit ihren gegenüberliegenden Stirnende ist die Rückholfeder 49 an der Gruppierungseinheit 12 gehalten. Das Adapterstück 50 ist in einem Längsnutabschnitt der Längsführung 3e parallel zum Führungsschlitz verschiebbar geführt. Dem Adapterstück 50 ist eine manuell bedienbare Arretierungseinrichtung 51 zugeordnet, die das Adapterstück 50 entweder sperrt oder für eine Rückholbewegung durch die Rückholfeder 49 freigibt. Die Arretiereinrichtung 51 weist eine manuell betätigbaren Bedienknopf auf, dessen Bewegung die Blockierung oder Freigabe des Adapterstückes 50 steuert. Das Adapterstück 50 ist vorzugsweise als Dämpfer ausgebildet, um die durch die Rückholfeder 49 initiierte Rückholbewegung zu verlangsamen, abzubremsen oder zu dämpfen. Vorzugsweise ist das Adapterstück 50 so gestaltet, dass es in den Längsnutabschnitt einer Rückholbewegung kraftschlüssig einen gewissen Widerstand entgegenbringt, wodurch die Dämpfungswirkung erzielt wird.

## Patentansprüche

1. Aufnahmevorrichtung für einen seitlich durch Seitenwandungen (18) begrenzten Laderaum eines Kraftfahrzeugs mit wenigstens einer zumindest abschnittsweise flexiblen Aufnahmetasche, die laderaumfest fixierbar ist, wobei zwei gegenüberliegende Seiten der Aufnahmetasche (9) jeweils einen formstabilen, sich über wenigstens die Länge der zugeordneten Seite erstreckenden Stützabschnitt (10) aufweisen, wobei die Stützabschnitte (10) mit ihren gegenüberliegenden Stirnbereichen in einer laderaumseitigen Halterung (3 bis 3d) lösbar fixierbar sind, und wobei die formstabilen Stützabschnitte (10) durch ein sich wenigstens in einem Bodenbereich der Aufnahmetasche (9) erstreckendes, flexibles Faltgebilde (13) miteinander verbunden sind, **dadurch gekennzeichnet, dass** die Halterung zwei im Bereich der Seitenwandungen (18) des Laderaums angeordnete Halterungsbereiche aufweist, die die wenigstens eine Aufnahmetasche (9) auf gegenüberliegenden Seiten flankieren, wobei jeder Halterungsbereich mit einer im Laderaum zumindest abschnittsweise parallel zu einem Laderaumboden (2) ausgerichteten Längsführung (3, 3a, 3b, 3c, 3d, 3f) versehen ist, und wobei die gegenüberliegenden Stirnbereiche des Stützabschnittes (10) der Aufnahmetasche (9) als jeweils seitlich nach außen abragende Halteköpfe (11) gestaltet sind.

2. Aufnahmevorrichtung nach Anspruch 1, **dadurch gekennzeichnet, dass** wenigstens zwei parallel zueinander ausgerichtete Aufnahmetaschen (9) vorgesehen sind.

3. Aufnahmevorrichtung nach Anspruch 2, **dadurch gekennzeichnet, dass** die beiden Aufnahmetaschen (9) mittels eines gemeinsamen Stützabschnittes (10a) miteinander in Verbindung stehen.

4. Aufnahmevorrichtung nach Anspruch 1, **dadurch gekennzeichnet, dass** die Stützabschnitte (10) und das Faltgebilde (13) in ihrer Funktionsposition derart angeordnet sind, dass die Aufnahmetasche (9) symmetrisch zu ihrer Mittellängsebene auf- oder zufaltbar ist.

5. Aufnahmevorrichtung nach Anspruch 4, **dadurch gekennzeichnet, dass** Mittel (29, 33) zum zwangsläufigen Auf- oder Zufalten der Aufnahmetasche vorgesehen sind.

6. Aufnahmevorrichtung nach Anspruch 5, **dadurch gekennzeichnet, dass** als Mittel zum zwangsläufigen Auf- oder Zufalten elastische Zug- oder Druckelemente im Bereich der Stützabschnitte angreifen.

7. Aufnahmevorrichtung nach Anspruch 6, **dadurch gekennzeichnet, dass** die elastischen Zug- oder Druckelemente zumindest teilweise in Hohlprofilen (45), insbesondere im Bereich der Stützabschnitte, integriert sind.

8. Aufnahmevorrichtung nach Anspruch 1, **dadurch gekennzeichnet, dass** Fixiermittel (14) zum Sichern der Aufnahmetasche (9) in einem kompakten Ruhezustand vorgesehen sind.

9. Aufnahmevorrichtung nach Anspruch 1, **dadurch gekennzeichnet, dass** das Faltgebilde als bahnförmige Falte zwischen zwei als Stützabschnitte dienenden Stützprofilen (10) verläuft.

10. Aufnahmevorrichtung nach Anspruch 1, **dadurch gekennzeichnet, dass** das Faltgebilde an gegenüberliegenden Stirnrandbereichen mit Seitenfaltabschnitten (15) versehen ist, die Stirnseitenwände für die Aufnahmetasche (9) darstellen.

11. Aufnahmevorrichtung nach Anspruch 10, **dadurch gekennzeichnet, dass** für einen Bodenbereich des Faltgebildes wenigstens ein zumindest weitgehend formstabiler, insbesondere geteilter Einlegeboden (32) vorgesehen ist.

12. Aufnahmevorrichtung nach Anspruch 1, **dadurch gekennzeichnet, dass** die Halterung (3 bis 3d) zur Fixierung der Halteköpfe (11) korrespondierende Aufnahmen (7) aufweist.

13. Aufnahmevorrichtung nach Anspruch 1, **dadurch gekennzeichnet, dass** mehrere Halteköpfe (11) auf jeder Seite mittels einer Gruppierungseinheit (12, 12a) trennbar zusammengefasst sind, die jeweils lösbar mit der Halterung (3) verbindbar ist.

14. Aufnahmevorrichtung nach Anspruch 1, **dadurch gekennzeichnet, dass** jede Gruppierungseinheit (12) mit einem Führungsabschnitt versehen ist, der in eingesetztem Zustand der Gruppierungseinheit mit der korrespondierenden Längsführung (3e) fluchtet.

15. Aufnahmevorrichtung nach Anspruch 1, **dadurch gekennzeichnet, dass** ein Gehäuse (54) zur Aufnahme wenigstens eines flexiblen Flächengebildes (55) vorgesehen ist, das sich quer zwischen den Längsführungen (3f) erstreckt und im Bereich gegenüberliegender Stirnseiten mit Halteköpfen (11f) versehen ist, die in den Längsführungen (3f) verschiebbar angeordnet sind.

16. Aufnahmevorrichtung nach Anspruch 15, **dadurch gekennzeichnet, dass** das Gehäuse (54) eine Arretiereinrichtung (57) aufweist, die das Gehäuse in den Längsführungen (3f) lösbar blockiert.

17. Aufnahmevorrichtung nach Anspruch 1, **dadurch gekennzeichnet, dass** die Längsführung (3d, 36, 42) in Verlängerung des Halterungsbereiches ausziehbar gestaltet ist.

18. Aufnahmevorrichtung nach Anspruch 17, **dadurch gekennzeichnet, dass** Blockiermittel (43, 44) zum Arretieren der Längsführung und/oder der Gruppierungseinheit vorgesehen sind.

19. Aufnahmevorrichtung nach Anspruch 12, **dadurch gekennzeichnet, dass** Antriebsmittel zur Verlagerung der Halteköpfe oder der Gruppierungseinheiten innerhalb der Längsführungen vorgesehen sind.

20. Aufnahmevorrichtung nach Anspruch 1, **dadurch gekennzeichnet, dass** die Längsführungen (4, 4a, 4b) in einem vorderen und/oder einem hinteren Endbereich zu dem Laderaumboden (2) hin nach unten geführt sind.

21. Aufnahmevorrichtung nach Anspruch 1, **dadurch gekennzeichnet, dass** die Halteköpfe mit Hilfe von Adaptermitteln (20, 20a) lösbar mit den Halterungsbereichen, den Längsführungen oder den Gruppierungseinheiten in Verbindung stehen.

22. Aufnahmevorrichtung nach Anspruch 21, **dadurch gekennzeichnet, dass** benachbarte Adaptermittel durch formschlüssig wirksame Rastmittel (23, 24) lösbar aneinanderfügbar sind.

23. Aufnahmevorrichtung nach Anspruch 22, **dadurch gekennzeichnet, dass** die Rastmittel einstückig an den Adaptermitteln (20, 20a) angeformt sind.

24. Aufnahmevorrichtung nach Anspruch 23, **dadurch gekennzeichnet, dass** die Halterung (37) innerhalb des Laderaums zwischen einer insbesondere in einem Laderaumboden oder in einer Wandbegrenzung versenkten Ruheposition und einer Funktionsposition beweglich gelagert ist.

25. Aufnahmevorrichtung nach Anspruch 24, **dadurch gekennzeichnet, dass** die Halterung wenigstens zwei beweglich angeordnete Halterungsbereiche (39, 40) aufweist, die aus einer in der Halterung (37) zusammengeführten Ruhelage in eine zueinander beabstandete und wenigstens eine Aufnahmetasche zwischen den Halterungsbereichen aufnehmende Funktionslage überführbar sind.

26. Aufnahmevorrichtung nach Anspruch 25, **dadurch gekennzeichnet, dass** die Halterungsbereiche horizontal schwenkbeweglich angeordnet sind.

27. Aufnahmevorrichtung nach Anspruch 1, **dadurch gekennzeichnet, dass** der Aufnahmevorrichtung ein horizontal ausziehbares Abdeckgebilde (6) zugeordnet ist, das die wenigstens eine Aufnahmetasche (9) in wenigstens einer Ausziehposition überdeckt.

28. Aufnahmevorrichtung nach Anspruch 1, **dadurch gekennzeichnet, dass** Synchronisierungsmittel (20b, 48) vorgesehen sind, die eine Parallelverlagerung der gegenüberliegenden Halteköpfe oder Gruppierungseinheiten wenigstens einer Aufnahmetasche relativ zu einer rechtwinklig zwischen den gegenüberliegenden Halterungsbereichen verlaufenden Querachse durchführen.

## Claims

1. Storage device for a storage space of a motor vehicle that is laterally delimited by side walls (18), comprising at least one at least partially flexible storage bag which can be firmly secured in the storage space, two opposing sides of the storage bag (9) each having a dimensionally stable supporting portion (10) extending along at least the length of the corresponding side, the supporting portions (10) being able to be detachably secured to the opposing end regions thereof in a mounting device (3 to 3d) in the storage space, and the dimensionally stable supporting portions (10) being connected to one another by a flexible folding structure (13) extending in at least one floor region of the storage bag (9), **characterised in that** the mounting device has two mounting regions which are arranged in the region of the side walls (18) of the storage space and which flank the at least one storage bag (9) on opposing sides, each mounting region being provided, in the storage space, with a longitudinal guide (3, 3a, 3b, 3c, 3d, 3f) which is at least partly orientated parallel with a storage space floor (2) and the opposing end regions of the supporting portion (10) of the storage bag (9) being constructed in each case as laterally outwardly protruding holding pins (11).

2. Storage device according to claim 1, **characterised in that** at least two storage bags (9) arranged parallel with one another are provided.

3. Storage device according to claim 2, **characterised in that** the two storage bags (9) are connected to one another by means of a common supporting portion (10a).

4. Storage device according to claim 1, **characterised in that** the supporting portions (10) and the folding structure (13) are arranged in the operating position thereof in such a manner that the storage bag (9) can be folded open or closed symmetrically relative to the central longitudinal plane thereof.

5. Storage device according to claim 4, **characterised in that** means (29, 33) for automatically folding the storage bag open or closed are provided.

6. Storage device according to claim 5, **characterised in that**, as means for automatically folding open and closed, resilient tension or pressure elements engage in the region of the supporting portions.

7. Storage device according to claim 6, **characterised in that** the resilient tension or pressure elements are at least partially integrated in hollow profiles (45), in particular in the region of the supporting portions.

8. Storage device according to claim 1, **characterised in that** fasteners (14) are provided to secure the storage bag (9) in a compact inactive state.

9. Storage device according to claim 1, **characterised in that** the folding structure extends as a track-shaped fold between two supporting profiles (10) which act as supporting portions.

10. Storage device according to claim 1, **characterised in that**, in opposing front edge regions, the folding structure is provided with lateral folding segments (15) which form front side walls for the storage bag (9).

11. Storage device according to claim 10, **characterised in that** at least one at least substantially dimensionally stable and, in particular, split insert floor (32) is provided for a floor portion of the folding structure.

12. Storage device according to claim 1, **characterised in that** the mounting device (3 to 3d) for securing the holding pins (11) has corresponding receptacles (7).

13. Storage device according to claim 1, **characterised in that** a plurality of holding pins (11) are joined together so as to be able to be separated at each side by means of a grouping unit (12, 12a) which can be detachably connected to the mounting device (3) in each case.

14. Storage device according to claim 1, **characterised in that** each grouping unit (12) is provided with a guide segment which is aligned with the corresponding longitudinal guide (3e) when the grouping unit is in its inserted condition.

15. Storage device according to claim 1, **characterised in that** a housing (54) is provided for receiving at least one flexible two-dimensional structure (55) which extends transversely between the longitudinal guides (3f) and is provided with holding pins (11f) in the region of opposing end faces which are arranged so as to be able to be displaced in the longitudinal guides (3f).

16. Storage device according to claim 15, **characterised in that** the housing (54) comprises a locking device (57) which detachably blocks the housing in the longitudinal guides (3f).

17. Storage device according to claim 1, **characterised in that** the longitudinal guide (3d, 36, 42) is designed to be able to be pulled out in an extension of the mounting region.

18. Storage device according to claim 17, **characterised in that** blocking means (43, 44) are provided to lock the longitudinal guide and/or the grouping unit.

19. Storage device according to claim 12, **characterised in that** drive mechanisms are provided to displace the holding pins or the grouping units within the longitudinal guides.

20. Storage device according to claim 1, **characterised in that** the longitudinal guides (4, 4a, 4b) are guided downwards relative to the storage space floor (2) in a front and/or rear end region.

21. Storage device according to claim 1, **characterised in that** the holding pins are connected, in a detachable manner, to the mounting regions, the longitudinal guides, or the grouping units by means of adapters (20, 20a).

22. Storage device according to claim 21, **characterised in that** adjacent adapters can be joined together, in a detachable manner, by means of positive-locking means (23, 24).

23. Storage device according to claim 22, **characterised in that** the positive-locking means are moulded to the adapters (20, 20a) in one piece.

24. Storage device according to claim 23, **characterised in that** the mounting device (37) is supported inside the storage space so as to be able to be moved between an inactive position which is recessed, especially in the floor of the storage space or in a wall divider, and an operating position.

25. Storage device according to claim 24, **characterised in that** the mounting device has at least two movably arranged mounting regions (39, 40) which can be moved from an inactive position collapsed in the mounting device (37) to an operating position spaced-apart from one another and receiving at least one storage bag between the mounting regions.

26. Storage device according to claim 25, **characterised in that** the mounting regions are arranged so as to pivot horizontally.

27. Storage device according to claim 1, **characterised in that** a covering structure (6) that can be pulled out horizontally and that covers the at least one storage bag (9) in at least one pulled-out position is assigned to the storage device.

28. Storage device according to claim 1, **characterised in that** synchronisation mechanisms (20b, 48) are provided which are used to displace, in parallel, the opposing holding pins or grouping units of at least one storage bag relative to a transverse axis extending at right angles between the opposing mounting regions.

## Revendications

1. Dispositif de maintien pour un espace de chargement de véhicule délimité par des parois latérales (18) avec au moins un récepteur partiellement flexible au moins pouvant être fixé dans ledit espace de chargement, deux côtés situés face à face dudit récepteur (9) comportant chacun un appui (10) de forme stable s'étendant au moins sur la longueur du côté affecté, lesdits appuis (10) pouvant être fixés dans une fixation (3 à 3d) côté espace de chargement avec leurs secteurs frontaux se trouvant face à face et étant amovibles, les appuis (10) de forme stable étant reliés les uns aux autres par un élément pliant (13) flexible s'étendant au moins dans un fond du récepteur (9), **caractérisé en ce que** la fixation comporte deux secteurs de fixation disposés dans la zone des parois latérales (18) de l'espace de chargement, lesdits secteurs de fixation flanquant le récepteur (9) sur des côtés se faisant face, chacun des secteurs de fixation étant muni d'un guidage longitudinal (3, 3a, 3b, 3c, 3d, 3f) aligné dans l'espace de chargement parallèlement, partiellement au moins, à un fond de l'espace de chargement (2), les secteurs frontaux qui se trouvent face à face de l'appui (10) du récepteur (9) étant configurés comme des têtes de fixation (11) se détachant chacune latéralement vers l'extérieur.

2. Dispositif de maintien selon la revendication 1, **caractérisé en ce que** deux récepteurs (9) au moins, alignés parallèlement l'un par rapport à l'autre, sont prévus.

3. Dispositif de maintien selon la revendication 2, **caractérisé en ce que** les deux récepteurs (9) sont reliés entre eux au moyen d'un appui commun (10a).

4. Dispositif de maintien selon la revendication 1, **caractérisé en ce que** les appuis (10) et l'élément pliant (13) sont disposés en leur position de fonctionnement de telle sorte que le récepteur (9) peut être plié ou déplié de manière symétrique par rapport à son plan longitudinal central.

5. Dispositif de maintien selon la revendication 4, **caractérisé en ce que** des moyens (29, 33) sont prévus pour plier et déplier obligatoirement le récepteur.

6. Dispositif de maintien selon la revendication 5, **caractérisé en ce que** les moyens pour plier et déplier obligatoirement sont des éléments élastiques de traction et de pression jouant au niveau des secteurs.

7. Dispositif de maintien selon la revendication 6, **caractérisé en ce que** les éléments élastiques de traction et de pression sont intégrés au moins partiellement dans les profilés creux (45), notamment au niveau des appuis.

8. Dispositif de maintien selon la revendication 1, **caractérisé en ce que** des moyens de fixation (14) sont prévus pour assurer le récepteur (9) dans une position de repos compacte.

9. Dispositif de maintien selon la revendication 1, **caractérisé en ce que** l'élément pliant passe comme pli en forme de bande entre deux profilés d'appui (10).

10. Dispositif de maintien selon la revendication 1, **caractérisé en ce que** l'élément pliant est équipé de secteurs pliants latéraux (15) prévus dans des secteurs marginaux frontaux se faisant face et représentant des parois latérales frontales du récepteur (9).

11. Dispositif de maintien selon la revendication 10, **caractérisé en ce que** pour un fond de l'élément pliant un fond d'insertion (32) au moins est prévu, ledit fond d'insertion étant au moins sensiblement de forme stable et notamment subdivisé.

12. Dispositif de maintien selon la revendication 1, **caractérisé en ce que** la fixation (3 à 3d) destinée à l'arrêt des têtes de fixation (11) comporte des logements (7) correspondants.

13. Dispositif de maintien selon la revendication 1, **caractérisé en ce que** plusieurs têtes de fixation (11) sont groupées de chaque côté au moyen d'une unité de groupage (12, 12a) et séparables, chacune desdites têtes de fixation pouvant être raccordées à la fixation (3) et étant amovibles.

14. Dispositif de maintien selon la revendication 1, **caractérisé en ce que** chacune des unités de groupage (12) comporte un secteur de guidage s'alignant avec le guidage longitudinal (3e) correspondant à l'état installé de ladite unité de groupage.

15. Dispositif de maintien selon la revendication 1, **caractérisé en ce qu'**un boîtier (54) est prévu pour le logement au moins d'un élément surfacique (55) flexible lequel s'étend transversalement entre les guidages longitudinaux (3f) et comporte au niveau de faces frontales se faisant face des têtes de fixation (11f) disposées de manière coulissante dans lesdits guidages longitudinaux (3f).

16. Dispositif de maintien selon la revendication 15, **caractérisé en ce que** le boîtier (54) comporte un dispositif d'arrêt (57) bloquant de manière amovible ledit boîtier dans les guidages longitudinaux (3f).

17. Dispositif de maintien selon la revendication 1, **caractérisé en ce que** le guidage longitudinal (3d, 36, 42) est escamotable dans le prolongement du secteur de fixation.

18. Dispositif de maintien selon la revendication 17, **caractérisé en ce que** des moyens de blocage (43, 44) sont prévus pour bloquer le guidage longitudinal et/ou l'unité de groupage.

19. Dispositif de maintien selon la revendication 12, **caractérisé en ce que** des moyens de commande sont prévus pour le déplacement des têtes de fixation ou des unités de groupage à l'intérieur des guidages longitudinaux.

20. Dispositif de maintien selon la revendication 1, **caractérisé en ce que** les guidages longitudinaux (4, 4a, 4b) passent dans une zone d'extrémité avant et/ou une zone d'extrémité arrière dans le fond de l'espace de chargement (2) vers le bas.

21. Dispositif de maintien selon la revendication 1, **caractérisé en ce que** les têtes de fixation sont reliées de manière amovible à l'aide d'adaptateurs (20, 20a) aux secteurs de fixation, aux guidages longitudinaux ou aux unités de groupage.

22. Dispositif de maintien selon la revendication 21, **caractérisé en ce que** des adaptateurs voisins peuvent être assemblés les uns aux autres de manière amovible à l'aide de moyens d'enclenchement (23, 24) agissant par complémentarité de forme.

23. Dispositif de maintien selon la revendication 22, **caractérisé en ce que** les moyens d'enclenchement épousent d'un seul tenant les adaptateurs (20, 20a).

24. Dispositif de maintien selon la revendication 23, **caractérisé en ce que** la fixation (37) est logée de manière mobile à l'intérieur de l'espace de chargement entre une position de repos notamment escamotée dans un fond de l'espace de chargement ou dans une délimitation de paroi, d'une part, et une position de fonctionnement, d'autre part.

25. Dispositif de maintien selon la revendication 24, **caractérisé en ce que** la fixation comporte deux secteurs de fixation (39, 40) au moins disposés de manière mobile et pouvant être déplacés depuis une position de repos regroupée dans la fixation (37) dans une position de fonctionnement, l'une distancée par rapport à l'autre, et pouvant recevoir au moins un récepteur entre lesdits secteurs de fixation.

26. Dispositif de maintien selon la revendication 25, **caractérisé en ce que** les secteurs de fixation sont pivotants et disposés de manière horizontale.

27. Dispositif de maintien selon la revendication 1, **caractérisé en ce qu'**un élément de recouvrement (6) escamotable à l'horizontale est affecté audit dispositif de maintien, ledit élément de recouvrement recouvrant un récepteur (9) au moins dans une position escamotée au moins.

28. Dispositif de maintien selon la revendication 1, **caractérisé en ce que** des moyens de synchronisation (20b, 48) sont prévus lesquels exécutent un déplacement parallèle des têtes de fixation se trouvant face à face ou des unités de groupage d'un récepteur au moins relativement à un axe transversal situé à angle droit entre les secteurs de fixation placés face à face.
